# EUROPÄISCHE PATENTSCHRIFT

(11) **EP 3 625 064 B1**
(45) Veröffentlichungstag und Bekanntmachung des Hinweises auf die Patenterteilung: **05.01.2022**
(21) Anmeldenummer: 18723457.0
(22) Anmeldetag: 04.05.2018
(51) Int. Cl.: B60G 3/20, B62D 7/14, B62D 7/18

(54) **RADAUFHÄNGUNG FÜR EIN ZUMINDEST GERINGFÜGIG AKTIV LENKBARES HINTERRAD EINES ZWEISPURIGEN FAHRZEUGS, ACHSE MIT EINER RADAUFHÄNGUNG UND FAHRZEUG MIT EINER RADAUFHÄNGUNG**
WHEEL SUSPENSION FOR AN AT LEAST SLIGHTLY ACTIVELY STEERABLE REAR WHEEL OF A TWO-TRACK VEHICLE, AXLE COMPRISING A WHEEL SUSPENSION, AND VEHICLE COMPRISING A WHEEL SUSPENSION
SUSPENSION POUR UNE ROUE ARRIÈRE D'UN VÉHICULE À DEUX VOIES, AU MOINS LÉGÈREMENT ORIENTABLE PAR DIRECTION ACTIVE, ESSIEU COMPRENANT UNE SUSPENSION DE ROUE ET VÉHICULE COMPRENANT UNE SUSPENSION DE ROUE

(30) Priorität: 19.05.2017 DE 102017208554
(43) Veröffentlichungstag der Anmeldung: 25.03.2020
(73) Patentinhaber: Bayerische Motoren Werke Aktiengesellschaft, 80809 München (DE)
(72) Erfinder: BRENNER, Markus, 81379 München (DE); STENZENBERGER, Alfred, 86681 Fuenfstetten (DE)
(86) Internationale Anmeldenummer: PCT/EP2018/061550
(87) Internationale Veröffentlichungsnummer: WO 2018/210587

(56) Entgegenhaltungen:
- EP-A1- 3 016 832
- EP-A2- 1 927 528
- DE-A1- 3 928 135
- DE-A1-102006 016 762
- DE-A1-102009 033 105
- DE-A1-102012 015 333
- DE-B3-102006 059 778

## Beschreibung

Die vorliegende Erfindung betrifft eine Radaufhängung für ein zumindest geringfügig aktiv lenkbares Hinterrad eines zweispurigen Fahrzeugs sowie eine Achse für ein zweispuriges Fahrzeug, insbesondere für ein zweispuriges Kraftfahrzeug, sowie ein Fahrzeug mit einer solchen Radaufhängung. Zum Stand der Technik wird insbesondere auf die DE 10 2012 015 333 A1, die DE 10 2009 033 105 A1, die DE 10 2006 016 762 A1, die EP 3 016 832 A1 und die DE 39 28 135 A1, wobei das Dokument DE 10 2012 015 333 A1 eine Radaufhängung für ein zumindest geringfügig aktiv lenkbares Hinterrad eines zweispurigen Fahrzeugs offenbart, wobei die Radaufhängung einen Radträger zur Aufnahme des Rades, einen Spurlenker und wenigstens einen weiteren Lenker zur Anbindung des Radträgers am Fahrzeugaufbau und eine Aktuatoreinrichtung mit wenigstens einem Aktuator zum aktiven Lenken des Rades in eine erste Aktiv-Lenkrichtung und in eine zweite Aktiv-Lenkrichtung, wobei der Radträger wenigstens zweiteilig ausgebildet ist und einen ersten Radträger-Teil und einen zweiten Radträger-Teil aufweist, wobei der erste Radträger-Teil zur Aufnahme des Rades ausgebildet ist und der zweite Radträger-Teil über wenigstens einen der weiteren Lenker am Fahrzeugaufbau anbindbar ist und nicht aktiv lenkbar ist, wobei der erste Radträger-Teil und der zweite Radträger-Teil in einem funktionsgemäßen Verwendungszustand der Radaufhängung in einem Fahrzeug mittels der Aktuatoreinrichtung derart relativ zueinander bewegbar sind, dass eine aktive, zumindest geringfügige Lenkbewegung des Rades bewirkbar ist und wobei der Spurlenker radträgerseitig am ersten Radträger-Teil angelenkt ist und wenigstens ein Aktuator der Aktuatoreinrichtung über den Spurlenker mit dem ersten Radträger-Teil gekoppelt ist, wobei wenigstens ein Aktuator der Aktuatoreinrichtung über den Spurlenker am ersten Radträger-Teil angebunden ist, wobei der erste Radträger-Teil und der zweite Radträger-Teil mittels zweier Kopplungseinrichtungen mechanisch miteinander verbunden sind, welche dazu eingerichtet sind, den ersten Radträger-Teil und den zweiten Radträgerteil beim aktiven Lenken jeweils gegenläufig in Fahrzeugquerrichtung zu führen, wobei eine Relativbewegung der beiden Radträger-Teile zueinander eine Lenkbewegung des Rades um eine Aktiv-Lenkachse bewirkt, wobei die Aktiv-Lenkachse in Fahrzeuglängsrichtung zwischen den beiden Kopplungseinrichtungen liegt.

Radaufhängungen für ein zumindest geringfügig aktiv lenkbares Hinterrad sind aus dem Stand der Technik grundsätzlich bekannt, beispielsweise aus dem "Renault Laguna GT", für welchen zum Anmeldezeitpunkt eine Hinterradlenkung unter der Bezeichnung "Allradlenkung 4Control" als Sonderausstattung angeboten wird, oder aus dem "7er BMW" sowie dem "5er BMW", für welche die Hinterradlenkung zum Anmeldezeitpunkt in Verbindung mit der Aktivlenkung als Sonderausstattung unter der Bezeichnung "Integral-Aktivlenkung" angeboten wird.

Bei beiden Lenksystemen, d.h. sowohl bei der "Allradlenkung 4Control" von "Renault" als auch bei der Integral-Aktivlenkung von "BMW" können bei einem Lenkeinschlag der Vorderräder gleichzeitig die Räder der Hinterachse - bis zu einem ein Radeinschlag von maximal 3,5° bzw. 3° - aktiv gelenkt werden, wobei die Hinterräder unterhalb eines definierten Geschwindigkeitswertes in die jeweils entgegengesetzte Richtung zu den Vorderrädern eingeschlagen werden, um einen möglichst kleinen Wendekreis zu ermöglichen, während oberhalb einer definierten Geschwindigkeit die Hinterräder in die gleiche Richtung wie die Vorderräder eingeschlagen werden, um die Fahrstabilität des Fahrzeugs bei höherem Tempo zu verbessern.

Bei der Hinterradlenkung von BMW, der "Integral-Aktivlenkung", wird die Lenkbewegung der hinteren Räder dabei mittels einer im Bereich der Hinterachse angeordneten Aktuatoreinrichtung bewirkt, welche jeweils über eine Spurstange mit dem linken Hinterrad und dem rechten Hinterrad gekoppelt ist und mittels welcher jeweils die aktive Lenkbewegung der Hinterräder bewirkt werden kann. Eine Radaufhängung für den vorgenannten Zweck ist beispielsweise aus DE 10 2011 007 283 A1 bekannt.

Aus Bauraumgründen ist der maximal mögliche Radeinschlagwinkel dabei in der Regel jedoch auf wenige Grad begrenzt, insbesondere sind in den meisten Fällen nur Radeinschlagwinkel von maximal 3,5° möglich, in Ausnahmefällen von maximal 5°, da für größere Radeinschlagwinkel nicht der erforderliche Bauraum zur Verfügung steht.

Ferner sind aus dem Stand der Technik, beispielsweise aus der DE 103 30 894 A1, Radaufhängungen zur aktiven Sturzverstellung bekannt, bei welchen mittels eines Aktuators der Sturzwinkel eines Fahrzeugrades aktiv verändert werden kann. Die in der DE 103 30 894 A1 beschriebene Radaufhängung weist einen geteilten Radträger auf, von dem ein erster Teil mit einem Rahmen oder einem Aufbau des Fahrzeugs über Lenker gekoppelt ist und ein zweiter Teil am ersten Teil schwenkbeweglich gelagert ist. Ferner ist ein Aktuator vorgesehen, durch den die beiden Radträgerteile gegeneinander verschwenkbar sind, wobei durch ein Verschwenken der beiden Radträgerteile zueinander der Sturz des am Radträger befestigten Fahrzeugrades verändert werden kann. Zusätzlich kann der Radträger weiter unterteilt sein und insbesondere drei Radträgerteile aufweisen, welche über zwei Aktoren miteinander in Verbindung stehen, wobei das erste Radträgerteil schwenkbeweglich um eine im Wesentlichen horizontal verlaufende Schwenkachse mit dem zweiten Radträgerteil verbunden ist und das zweite Radträger Teil um eine im Wesentlichen vertikal verlaufende Schwenkachse mit dem dritten Radträgerteil schwenkbeweglich verbunden ist. Durch die schwenkbewegliche Verbindung zwischen dem zweiten Radträgerteil und dem dritten Radträgerteil mit im Wesentlichen vertikal verlaufender Schwenkachse kann über einen zwischen dem zweiten und dritten Radträgerteil wirkenden Aktuator ein aktives Lenken, insbesondere ein aktives Spurlenken, des am Radträger angebunden Fahrzeugrades bewirkt werden.

Vor diesem Hintergrund des Standes der Technik ist es eine Aufgabe der vorliegenden Erfindung, eine alternative Radaufhängung bereitzustellen, insbesondere eine verbesserte Radaufhängung, welche ein zumindest geringfügig aktives Lenken eines Hinterrades eines zweispurigen Fahrzeugs ermöglicht. Vorzugsweise ist es dabei eine Aufgabe der Erfindung, eine Radaufhängung für ein zumindest geringfügig aktiv lenkbares Hinterrad eines zweispurigen Fahrzeugs bereitzustellen, mit welcher bei vergleichbarem zur Verfügung stehenden Bauraum größere Radeinschlagwinkel möglich sind. Darüber hinaus ist eine Aufgabe der vorliegenden Erfindung, eine aktiv lenkbare Hinterachse für ein zweispuriges Fahrzeug bereitzustellen sowie ein zweispuriges Fahrzeug mit aktiv lenkbarer Hinterachse.

Gelöst wird diese Aufgabe durch eine Radaufhängung mit den Merkmalen von Anspruch 1, durch eine Achse mit den Merkmalen von Anspruch 15 sowie durch ein Fahrzeug mit den Merkmalen von Anspruch 17. Vorteilhafte sowie bevorzugte Ausgestaltung der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht. Manche der nachfolgend genannten Merkmale werden, um Wiederholungen zu vermeiden, teilweise nur einmal beschrieben, d.h. nur im Zusammenhang mit einer erfindungsgemäßen Radaufhängung, einer erfindungsgemäßen Achse oder einem erfindungsgemäßen Fahrzeug, gelten jedoch unabhängig davon sowohl für eine erfindungsgemäße Radaufhängung, eine erfindungsgemäße Achse als auch für ein erfindungsgemäßes Fahrzeug.

Eine erfindungsgemäße Radaufhängung für ein zumindest geringfügig aktiv lenkbares Hinterrad eines zweispurigen Fahrzeugs weist einen Radträger zur Aufnahme des Rades, einen Spurlenker und wenigstens einen weiteren Lenker zur Anbindung des Radträgers am Fahrzeugaufbau und eine Aktuatoreinrichtung mit wenigstens einem Aktuator zum aktiven Lenken des Rades in eine erste Aktiv-Lenkrichtung, vorzugsweise in Vorspur, und in eine zweite Aktiv-Lenkrichtung, insbesondere in Nachspur, auf, wobei der Radträger wenigstens zweiteilig ausgebildet ist und einen ersten Radträger-Teil und einen zweiten Radträger-Teil aufweist. Der erste Radträger-Teil ist zur Aufnahme des Rades ausgebildet und der zweite Radträger-Teil ist über wenigstens einen der weiteren Lenker am Fahrzeugaufbau anbindbar, insbesondere nicht aktiv lenkbar, wobei der erste Radträger-Teil und der zweite Radträger-Teil in einem funktionsgemäßen Verwendungszustand der Radaufhängung in einem Fahrzeug mittels der Aktuatoreinrichtung derart relativ zueinander bewegbar sind, dass eine aktive, zumindest geringfügige Lenkbewegung des Rades bewirkbar ist.

Gemäß einem ersten Aspekt der Erfindung ist der Spurlenker radträgerseitig am ersten Radträger-Teil angelenkt und wenigstens ein Aktuator der Aktuatoreinrichtung ist über den Spurlenker mit dem ersten Radträger-Teil gekoppelt, wobei insbesondere wenigstens ein Aktuator der Aktuatoreinrichtung über den Spurlenker am ersten Radträger-Teil angebunden ist.

Gemäß einem zweiten Aspekt der Erfindung ist der Spurlenker hingegen radträgerseitig am zweiten Radträger-Teil angelenkt und der erste Radträger-Teil und der zweite Radträger-Teil sind über wenigstens ein Aktuator der Aktuatoreinrichtung miteinander gekoppelt.

Mit einer erfindungsgemäßen Radaufhängung, sowohl mit einer gemäß dem ersten Aspekt der Erfindung ausgestalteten Radaufhängung als auch mit einer gemäß dem zweiten Aspekt der Erfindung ausgebildeten Radaufhängung, kann gegenüber einer vergleichbaren Radaufhängung mit einem einteiligem Radträger bei nahezu gleichem Bauraumbedarf des Radträgers und ansonsten nahezu unveränderter Achsgeometrie jeweils eine Zunahme des beim aktiven Lenken maximal möglichen Radeinschlagwinkels von mehr als 2° erreicht werden, insbesondere je nach Achsgeometrie und -kinematik eine Zunahme von bis zu 7°, insbesondere ohne Bauraumkonflikte zwischen dem Rad bzw. dessen Reifen und einem Hinterachsträger und/oder der Karosserie, insbesondere deren Längsträgern. D.h. mit einer erfindungsgemäßen Radaufhängung können, insbesondere bei vergleichbarem Bauraumbedarf Radeinschlagwinkel von mehr als 5°, insbesondere von bis zu 10°, insbesondere in Vorspur, realisiert werden. Infolgedessen ist eine erhebliche Reduzierung des Wendekreises möglich.

Unter "aktiv lenkbar" wird im Sinne der Erfindung das Bewirken einer Lenkbewegung mittels einer Aktuatoreinrichtung verstanden, d.h. ein im Sinne der Erfindung aktiv lenkbares Rad ist ein Rad, welches mittels einer Aktuatoreinrichtung gelenkt werden kann.

Unter Lenken wird im Sinne der Erfindung das Bewirken einer Spuränderung eines Rades verstanden.

Unter "zumindest geringfügig aktiv lenkbar" wird im Sinne der Erfindung das Bewirken einer Lenkbewegung, insbesondere einer Spuränderung, mit einem Radeinschlagwinkel von weniger als 15°, insbesondere von weniger als 10°, verstanden.

Unter einem Spurlenker wird im Sinne der Erfindung derjenige Lenker der Radaufhängung verstanden, mittels welchem die Spur des Rades einstellbar ist.

"Gekoppelt" bedeutet im Sinne der Erfindung "miteinander in Wechselwirkung stehend, insbesondere mechanisch", wobei zwei Bauteile, die miteinander gekoppelt sind, im Sinne der Erfindung dazu mechanisch miteinander verbunden sind, wobei die beiden Bauteile dabei jeweils direkt, d.h. unmittelbar, ohne zusätzliche Bauteile dazwischen, miteinander verbunden sein können, oder aber auch indirekt, d.h. mittelbar mit wenigstens einem weiteren Bauteil dazwischen.

Vorzugsweise ist der wenigstens eine weitere Lenker einer erfindungsgemäßen Radaufhängung, besonders bevorzugt sämtliche weiteren Lenker, radträgerseitig am zweiten Radträger-Teil angebunden, insbesondere angelenkt, wobei vorzugsweise der wenigstens eine Lenker der Radaufhängung wie auf übliche, aus dem Stand der Technik bekannte Weise am Radträger angebunden ist, insbesondere sämtliche weiteren Lenker.

Vorzugsweise ist der zweite Radträger-Teil einer erfindungsgemäßen Radaufhängung nicht aktiv lenkbar ausgestaltet, insbesondere nicht aktiv lenkbar am Fahrzeugaufbau angebunden, sondern nur der erste Radträger-Teil. Der zweite Radträger-Teil ist vorzugsweise derart am Fahrzeugaufbau angebunden, dass er, wie bei einer konventionellen Achse, eine Hubbewegung des Rades und/oder elastokinematische Lenkbewegungen des Rades ermöglicht, wobei der zweite Radträger-Teil insbesondere nicht aktiv relativ gegenüber dem Fahrzeugaufbau schwenkbar ist, sondern lediglich derart gegenüber dem Fahrzeugaufbau beweglich ist, dass die vorgenannte Hubbewegung und/oder die vorgenannten elastokinematischen Lenkbewegungen insbesondere nur durch äußere, auf das Rad wirkende Quer-, Längs- und/oder Vertikalkräfte bewirkbar ist.

Wenigstens ein Aktuator der Aktuatoreinrichtung ist vorzugsweise ein Linearaktuator, insbesondere ein Linearmotor, wobei der Aktuator vorzugsweise ein elektrisch antreibbarer Aktuator ist. Alternativ kann wenigstens ein Aktuator der Aktuatoreinrichtung auch ein Hydraulikaktuator sein, insbesondere ein Hydraulikzylinder.

Der Spurlenker einer gemäß dem ersten Aspekt der Erfindung ausgebildeten erfindungsgemäßen Radaufhängung ist vorzugsweise fahrzeugaufbauseitig mit dem Aktuator verbunden, wobei der Aktuator in diesem Fall besonders bevorzugt am Fahrzeugaufbau, d.h. an der Karosserie und/oder an einem Achsträger, insbesondere am Hinterachsträger, angebunden ist. Besonders bevorzugt ist in diesem Fall wenigstens ein Aktuator und/oder die gesamte Aktuatoreinrichtung als Linearaktuator ausgebildet, insbesondere als sogenannter "Zentralaktuator" und/oder als "Zentralaktuatoreinrichtung", über welche sowohl das linke Hinterrad einer aktiv lenkbaren Hinterachse eines zweispurigen Fahrzeugs aktiv lenkbar ist, als auch das rechte Hinterrad der Achse, vorzugsweise gleichzeitig, insbesondere gleichsinnig.

Gleichsinnig Lenken im Sinne der Erfindung bedeutet dabei beide Räder einer Achse gleichzeitig in die gleiche Richtung zu lenken, d.h. gleichzeitig nach links oder gleichzeitig nach rechts zu lenken.

Bei einer gemäß dem zweiten Aspekt der Erfindung ausgestalteten, erfindungsgemäßen Radaufhängung ist der Spurlenker hingegen fahrzeugaufbauseitig vorzugsweise unmittelbar am Fahrzeugaufbau angelenkt, d.h. an der Karosserie des Fahrzeugs oder einem Achsträger, insbesondere am Hinterachsträger. In diesem Fall wird die aktive Lenkbewegung, d.h. insbesondere die Relativbewegung des ersten Radträger-Teils gegenüber dem zweiten Radträger-Teil, durch den wenigstens einen Aktuator bewirkt, über welchen der erste Radträger-Teil und der zweite Radträger-Teil miteinander gekoppelt sind.

In einer vorteilhaften Ausgestaltung einer gemäß dem zweiten Aspekt der Erfindung ausgebildeten erfindungsgemäßen Radaufhängung ist wenigstens ein Aktuator der Aktuatoreinrichtung am ersten Radträger-Teil und am zweiten Radträger-Teil angebunden und insbesondere zumindest teilweise in Fahrzeugquerrichtung zwischen dem ersten Radträger-Teil und dem zweiten Radträger-Teil angeordnet. Dadurch kann auf besonders einfache Art und Weise, insbesondere mit einem Linearaktuator, die zum aktiven Lenken erforderliche Relativbewegung zwischen dem ersten Radträger-Teil und dem zweiten Radträger-Teil bewirkt werden, insbesondere erzeugt werden.

In einer vorteilhaften Ausgestaltung einer erfindungsgemäßen Radaufhängung, sowohl bei einer gemäß dem ersten Aspekt der Erfindung ausgebildeten Radaufhängung als auch bei einer gemäß dem zweiten Aspekt der Erfindung ausgebildeten Radaufhängung, sind der erste Radträger-Teil und der zweite Radträger-Teil schwenkbeweglich um eine im Wesentlichen in Fahrzeughochrichtung verlaufende Schwenkachse miteinander verbunden, welche zumindest in einem ersten definierten Aktiv-Lenkwinkelbereich und/oder für die erste Aktiv-Lenkrichtung eine Aktiv-Lenkachse definiert.

Vorzugsweise sind dazu der erste Radträger-Teil und der zweite Radträger-Teil mittels eines Scharniergelenks miteinander verbunden, wobei das Scharniergelenks vorzugsweise einen Bolzen aufweist, über welchen der erste Radträger-Teil und der zweite Radträger-Teil miteinander verbunden sind und welcher insbesondere die Schwenkachse definiert.

Als erster definierter Aktiv-Lenkwinkelbereich im Sinne der Erfindung wird dabei ein erster Radeinschlagswinkelbereich verstanden, der ausgehend von der Geradeausstellung durch eine aktive Lenkbewegung in eine erste Aktiv-Lenkrichtung durchfahren wird, wobei sich dabei das jeweilige Rad dabei um eine Aktiv-Lenkachse dreht bzw. um eine Aktiv-Lenkachse schwenkt.

Als zweiter definierter Aktiv-Lenkwinkelbereich im Sinne der Erfindung wird dabei ein zweiter Radeinschlagswinkelbereich verstanden, der ausgehend von der Geradeausstellung durch eine aktive Lenkbewegung in eine zweite Aktiv-Lenkrichtung durchfahren wird, wobei sich dabei das jeweilige Rad dabei ebenfalls um eine Aktiv-Lenkachse dreht bzw. um eine Aktiv-Lenkachse schwenkt.

Unter einer Aktive-Lenkachse wird im Sinne der Erfindung eine Lenkachse verstanden, um welche beim aktiven Lenken eine Schwenkbewegung des Rades, und damit eine Lenkbewegung mit einer Spurwinkeländerung erfolgt.

Die Aktiv-Lenkachse der ersten Aktiv-Lenkrichtung und die Aktiv-Lenkachse der zweiten Aktiv-Lenkrichtung können zusammenfallen, müssen aber nicht identisch sein.

Der erste definierte Aktiv-Lenkwinkelbereich wird bevorzugt beim Lenken ausgehend von einer Geradeausstellung in Vorspur durchfahren. Beim Lenken ausgehend von der Geradeausstellung in Nachspur wird vorzugsweise der zweite definierte Lenkwinkelbereich durchfahren.

Vorzugsweise ist eine erfindungsgemäße Radaufhängung grundsätzlich derart ausgebildet, dass der erste Radträger-Teil und der zweite Radträger-Teil gemeinsam um eine zweite Lenkachse schwenkbar sind, insbesondere ohne relativ zueinander bewegt zu werden, wobei die zweite Lenkachse vorzugsweise durch die die Geometrie und Elastokinematik der Radaufhängung definiert ist.

Bei einigen Ausgestaltungen einer erfindungsgemäßen Radaufhängung kann der gesamte Radträger dabei aktiv um diese zweite Lenkachse verschwenkt werden, d.h. aktiv um die zweite Lenkachse gelenkt werden.

Bei anderen Ausgestaltungen einer erfindungsgemäßen Radaufhängung kann der gesamte Radträger hingegen nur passiv, d.h. nur aufgrund äußerer Kräfte und der Achskinematik und/oder Elastokinematik, um die zweite Lenkachse verschwenkt werden.

Einige Ausgestaltungen einer erfindungsgemäßen Radaufhängung weisen mehrere Aktiv-Lenkachsen auf, insbesondere eine erste Aktiv-Lenkachse zum Lenken in die erste-Aktiv-Lenkrichtung und eine zweite Aktiv-Lenkachse zum Lenken in die zweite Aktiv-Lenkrichtung.

Bei einigen Ausgestaltungen einer erfindungsgemäßen Radaufhängung kann wenigstens eine Aktiv-Lenkachse mit einer anderen Aktiv-Lenkachse und/oder der zweiten Lenkachse, um welche beide Radträger-Teile gemeinsam ohne relativ zueinander bewegt zu werden, verschwenkt werden können, zusammenfallen. Bei anderen Ausgestaltungen einer erfindungsgemäßen Radaufhängung ist die zweite Lenkachse jeweils von wenigstens einer Aktiv-Lenkachse oder von sämtlichen Aktiv-Lenkachsen verschieden.

In einer weiteren vorteilhaften Ausgestaltung einer erfindungsgemäßen Radaufhängung, sowohl bei einer gemäß dem ersten Aspekt ausgebildeten Radaufhängung als auch bei einer gemäß dem zweiten Aspekt der Erfindung ausgebildeten Radaufhängung, liegt die Schwenkachse, um welche der erste Radträger-Teil und der zweite Radträger-Teil schwenkbeweglich zueinander ausgebildet sind, in Fahrzeuglängsrichtung vor Radmitte. Dadurch kann eine besonders vorteilhafte Ausgestaltung einer erfindungsgemäßen Radaufhängung erreicht werden, insbesondere kann der Spurlenker jeweils hinter Radmitte angeordnet werden, was bauraumtechnisch besonders vorteilhaft ist.

Dementsprechend ist in einer weiteren vorteilhaften Ausgestaltung einer erfindungsgemäßen Radaufhängung, sowohl bei einer gemäß dem ersten Aspekt Erfindung Ausgestaltungsradaufhängung als auch bei einer gemäß dem zweiten Aspekt der Erfindung ausgestalteten Radaufhängung, der Spurlenker in Fahrzeuglängsrichtung hinter Radmitte am Radträger angelenkt. Dies ist insbesondere aus Bauraumgründen vorteilhaft. Damit ist bei einer Radaufhängung gemäß dem ersten Aspekt der Erfindung der Spurlenker dann hinter Radmitte am ersten Radträger-Teil angelenkt und bei einer Radaufhängung gemäß dem zweiten Aspekt der Erfindung hinter Radmitte am zweiten Radträger-Teil.

Neben der Anordnung des Spurlenkers in Fahrzeuglängsrichtung hinter Radmitte hat die Anordnung der Schwenkachse in Fahrzeuglängsrichtung vor Radmitte bei einer erfindungsgemäßen, gemäß dem ersten Aspekt der Erfindung ausgebildeten Radaufhängung ferner den Vorteil, dass wenigstens ein Aktuator der Aktuatoreinrichtung, insbesondere die gesamte Aktuatoreinrichtung, ebenfalls in Fahrzeuglängsrichtung hinter Radmitte angeordnet werden kann, insbesondere im Bereich der Fahrzeugmitte, wodurch auf besonders einfache Art und Weise die Verwendung einer zentralen Aktuatoreinrichtung, insbesondere eines zentralen Aktuators, möglich wird, mit welchem sowohl das linke Hinterrad als auch das rechte Hinterrad einer Hinterachse eines zweispurigen Fahrzeug aktiv gelenkt werden können, vorzugsweise gleichzeitig und insbesondere gleichsinnig. Dies hat den Vorteil, dass nur ein Aktuator anzusteuern ist und auf Fehler etc. zu überwachen ist, wodurch eine Integration in das Gesamtfahrzeug gegenüber zwei einzelnen Aktuatoren, d.h. gegenüber einer Ausgestaltung mit einem Aktuator für das linke Fahrzeugrad und einem Aktuator für das rechte Fahrzeugrad, erheblich vereinfacht wird.

In einer weiteren vorteilhaften Ausgestaltung einer erfindungsgemäßen Radaufhängung, wobei diese Ausgestaltung insbesondere vorteilhaft im Zusammenhang mit einer gemäß dem ersten Aspekt der Erfindung ausgebildeten Radaufhängung ist, weist wenigstens ein Radträger-Teil eine Führungseinrichtung zur Führung des anderen Radträger-Teils auf, vorzugsweise eine Führungseinrichtung zur Führung eines freien Endes des anderen Radträger-Teils, insbesondere zur Führung des von der Schwenkachse abgewandten freien Endes des anderen Radträger-Teils. Dadurch kann die Stabilität der Radführung deutlich verbessert werden.

Vorzugsweise weist dabei der zweite Radträger-Teil eine Führungseinrichtung zur Führung des ersten Radträger-Teils auf. Eine solche Führungseinrichtung kann beispielsweise eine Führungsschiene oder eine Führungsnut sein oder ein oder mehrere Führungsbolzen oder dergleichen.

Besonders bevorzugt ist die Führungseinrichtung eine einseitig offene Nut, welche insbesondere wenigstens in Nachspur eine Führung des ersten Radträger-Teils ermöglicht, insbesondere um eine Geradeausstellung herum, vorzugsweise bis wenigstens 1,5° Nachspur, insbesondere bis 3° in Nachspur.

In Vorspur, d.h. beim Lenken in Vorspur, ist eine Führung des ersten Radträger-Teils nicht unbedingt notwendig und die durch die Führung erreichbaren Vorteile sind möglicherweise nur durch Bauraumnachteile darstellbar, sodass es in einigen Fällen vorteilhafter sein kann, wenn die Führungseinrichtung derart ausgebildet ist, dass sie nur eine Führung in Nachspur ermöglicht oder eine Führung in Nachspur und nur in einem geringen Aktiv-Lenkwinkelbereich in Vorspur um die Geradeausstellung herum, vorzugsweise bis lediglich 1° oder 1,5° oder maximal 3° in Vorspur.

In einer weiteren vorteilhaften Ausgestaltung einer erfindungsgemäßen, gemäß dem ersten Aspekt der Erfindung ausgebildeten Radaufhängung, weist der Radträger wenigstens einen Anschlag auf, insbesondere einen mechanischen Anschlag, um eine aktive Lenkbewegung um die erste Aktiv-Lenkachse wenigstens in eine Aktiv-Lenkrichtung, vorzugsweise in die zweite Lenkrichtung, insbesondere in Nachspur, zu begrenzen. Dadurch kann, insbesondere in Verbindung mit einer zentralen, in Fahrzeugmitte angeordneten Aktuatoreinrichtung, erreicht werden, dass nach Erreichen des Anschlags die Radaufhängung eine Lenkkinematik aufweist wie eine vergleichbare Radaufhängung mit einem einteilig ausgebildeten Radträger. Dies hat den Vorteil, dass auf diese Weise besonders einfache Art und Weise ab Erreichen des Anschlags die herkömmlichen Kinematik- und Elastokinematikzielwerte eingestellt werden können, und dass insbesondere ein weiteres Lenken in die zweite Aktiv-Lenkrichtung mit entsprechender Kinematik und Elastokinematik, wie bereits bei aus dem Stand der Technik bekannten Hinterachslenkungen üblich, über die Kardanik der Lager bewirkt werden kann.

Selbstverständlich kann auch in die erste Aktiv-Lenkrichtung wenigstens ein Anschlag vorgesehen sein, insbesondere ein mechanischer Anschlag, welcher eine aktive Lenkbewegung in die erste Aktiv-Lenkrichtung begrenzt, insbesondere in Vorspur, um dadurch nach Erreichend des Anschlags beim Lenken in Vorspur ein Verhalten der Radaufhängung wie mit einem einteiligen Radträger zu bewirken. Dies ist jedoch nicht in allen Fällen aus bauraumtechnischer Sicht vorteilhaft. Hierbei kommt es insbesondere auf die jeweiligen Eigenschaften der Radaufhängung an, insbesondere deren Geometrie und Kinematik, und ob dies zweckmäßig ist.

In einer weiteren vorteilhaften Ausgestaltung einer erfindungsgemäßen, gemäß dem ersten Aspekt der Erfindung ausgebildeten Radaufhängung, ist die Radaufhängung insbesondere derart ausgebildet, dass nach Erreichen des Anschlags, vorzugsweise außerhalb des ersten definierten Aktiv-Lenkwinkelbereich, der erste Radträger-Teil und der zweite Radträger-Teil bei weiterem Lenken, vorzugsweise bei weiterem Lenken in die zweite Aktiv-Lenkrichtung, insbesondere beim weiteren Nachspurlenken, d.h. bei weiterem Lenken in Nachspur, gemeinsam um die zweite Lenkachse bewegbar sind, insbesondere bei weiterem, aktiven Lenken mittels der Aktuatoreinrichtung, wobei die zweite Lenkachse insbesondere durch die Geometrie und Elastokinematik der Radaufhängung definiert ist.

In einer weiteren vorteilhaften Ausgestaltung einer erfindungsgemäßen, gemäß dem zweiten Aspekt der Erfindung ausgebildeten Radaufhängung, weist die Aktuatoreinrichtung wenigstens zwei Aktuatoren auf, wobei vorzugsweise der erste Radträger-Teil und der zweite Radträger-Teil über zwei Aktuatoren der Aktuatoreinrichtung miteinander gekoppelt sind.

In einer besonders vorteilhaften Ausgestaltung einer erfindungsgemäßen Radaufhängung gemäß dem zweiten Aspekt der Erfindung, sind der erste Radträger-Teil und der zweite Radträger-Teil zum aktiven Lenken dabei jeweils gegenläufig in Fahrzeugquerrichtung mittels der beiden Aktuatoren bewegbar, wobei eine Relativbewegung der beiden Radträger-Teile zueinander eine Lenkbewegung des Rades um eine Aktiv-Lenkachse bewirkt, wobei beim aktiven Lenken in eine erste Aktiv-Lenkrichtung, die Aktiv-Lenkachse vorzugsweise in Fahrzeuglängsrichtung vor Radmitte liegt und insbesondere beim aktiven Lenken in eine zweite Aktiv-Lenkrichtung hinter Radmitte. Alternativ kann die Aktiv-Lenkachse zwischen den beiden Aktuatoren liegen, insbesondere mittig dazwischen, vorzugsweise auf Höhe der Radmitte. Eine derartige Radaufhängung ermöglicht auf besonders einfache Art und Weise ein unabhängiges Lenken der beiden Räder, d.h. des rechten Rades und des linken Rades, einer Hinterachse voneinander. Ferner ist kein Bauraum in Fahrzeugmitte für eine zentrale Aktuatoreinrichtung erforderlich. Es sind jedoch für jedes Rad zwei Aktuatoren erforderlich, welche in das Gesamtfahrzeug entsprechend zu integrieren sind und jeweils einen entsprechenden Integrationsaufwand erfordern.

In einer erfindungsgemäßen Ausgestaltung einer erfindungsgemäßen Radaufhängung, sowohl bei einer gemäß dem ersten Aspekt der Erfindung ausgebildeten Radaufhängung als auch bei einer gemäß dem zweiten Aspekt Erfindung ausgebildeten Radaufhängung, sind der erste Radträger-Teil und der zweite Radträger-Teil mittels wenigstens einer Kopplungseinrichtung mechanisch miteinander verbunden.

In einer erfindungsgemäßen Ausgestaltung einer erfindungsgemäßen Radaufhängung, die sowohl gemäß dem ersten Aspekt der Erfindung ausgebildet sein kann als auch gemäß dem zweiten Aspekt der Erfindung, sind der erste Radträger-Teil und der zweite Radträger-Teil mittels zweier Kopplungseinrichtungen mechanisch miteinander verbunden, wobei die Kopplungseinrichtungen dazu eingerichtet sind den ersten Radträger-Teil und den zweiten Radträger-Teil beim aktiven Lenken vorzugsweise jeweils gegenläufig in Fahrzeugquerrichtung zu führen, wobei eine Relativbewegung der beiden Radträger-Teile zueinander eine Lenkbewegung des Rades um eine Aktiv-Lenkachse bewirkt, wobei die Aktiv-Lenkachse insbesondere in Fahrzeuglängsrichtung zwischen den beiden Kopplungseinrichtungen liegt, vorzugsweise mittig dazwischen, insbesondere auf Höhe Radmitte.

In einer erfindungsgemäßen Ausgestaltung einer erfindungsgemäßen Radaufhängung, sowohl bei einer gemäß dem ersten Aspekt der Erfindung ausgebildeten Radaufhängung als auch bei einer gemäß dem zweiten Aspekt der Erfindung ausgebildeten Radaufhängung, weist wenigstens eine Kopplungseinrichtung eine Kulissenführung auf oder ist durch eine Kulissenführung gebildet, wobei erfindungsgemäß beide Kopplungseinrichtungen eine Kulissenführung aufweisen oder durch eine Kulissenführung gebildet sind.

Besonders bevorzugt weist dabei der zweite Radträger-Teil wenigstens eine Kulisse auf, vorzugsweise wenigstens eine Kulissen-Führungsnut, während insbesondere der erste Radträger-Teil wenigstens einen Kulissenstein aufweist, insbesondere wenigstens einen Kulissen-Führungsbolzen, der vorzugsweise in der Kulisse, insbesondere in der Kulissen-Führungsnut, des zweiten Radträger-Teils geführt ist. Dadurch kann eine besonders vorteilhafte mechanische Kopplung des ersten Radträger-Teils mit dem zweiten Radträger-Teil realisiert werden.

Insbesondere mit zwei, zwischen dem ersten Radträger-Teil und dem zweiten Radträger-Teil angeordneten Aktuatoren, insbesondere, wenn die Aktuatoren als Linearaktuatoren ausgebildet sind, kann auf einfache Art und Weise eine Radaufhängung mit flexibel einstellbarer Aktiv-Lenkachse bereitgestellt werden, da sich die jeweilige Aktiv-Lenkachse in Abhängigkeit von der Relativbewegung der beiden Aktuatoren einstellt.

Eine erfindungsgemäße Achse für ein zweispuriges Fahrzeug, insbesondere für ein zweispuriges Kraftfahrzeug, mit einer linken Radaufhängung und einer rechten Radaufhängung ist, dadurch gekennzeichnet, dass es wenigstens eine erfindungsgemäße Radaufhängung aufweist, wobei vorzugsweise die linke Radaufhängung und die rechte Radaufhängung die gleichen Merkmale aufweisen, d.h. einen identischen Aufbau aufweisen, nur jeweils an die jeweilige Fahrzeugseite angepasst.

In einer vorteilhaften Ausgestaltung einer erfindungsgemäßen Achse weist die Achse eine linke Radaufhängung für ein linkes Rad und eine rechte Radaufhängung für ein rechtes Rad auf, wobei die linke Radaufhängung und die rechte Radaufhängung jeweils gemäß dem ersten Aspekt Erfindung ausgebildet sind und eine gemeinsame Aktuatoreinrichtung aufweisen, insbesondere einen gemeinsamen Aktuator, wobei mittels der gemeinsamen Aktuatoreinrichtung der erste Radträger-Teil und der zweite Radträger-Teil der linken Radaufhängung in einem funktionsgemäßen Einbauzustand der Achse in einem Fahrzeug derart relativ zueinander bewegbar sind, dass eine aktive, zumindest geringfügige Lenkbewegung des linken Rades bewirkbar ist, und wobei, vorzugweise gleichzeitig, mittels der gemeinsamen Aktuatoreinrichtung der erste Radträger-Teil der zweite Radträger-Teil der rechten Radaufhängung in einem von uns gemäßen Einbauzustand der Achse in einem Fahrzeug derart relativ zueinander bewegbar sind, dass eine aktive, zumindest geringfügige, insbesondere gleichsinnige, Lenkbewegung des rechten Rades der Achse bewirkbar ist. D.h. mit anderen Worten, eine erfindungsgemäße Achse weist vorzugsweise eine zentrale Aktuatoreinrichtung auf, mittels welcher sowohl das linke hintere Rad als das rechte Rad der Achse jeweils aktiv lenkbar sind, vorzugweise gleichzeitig, insbesondere gleichsinnig, d.h. gleichzeitig nach links und/oder gleichzeitig nach rechts.

Ein erfindungsgemäßes Fahrzeug ist, dadurch gekennzeichnet, dass es wenigstens eine erfindungsgemäße Radaufhängung und/oder wenigstens eine erfindungsgemäße Achse aufweist.

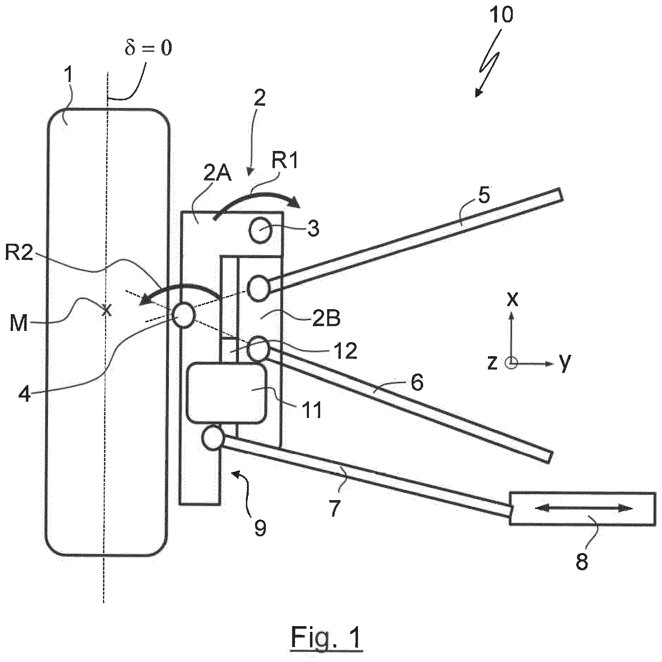

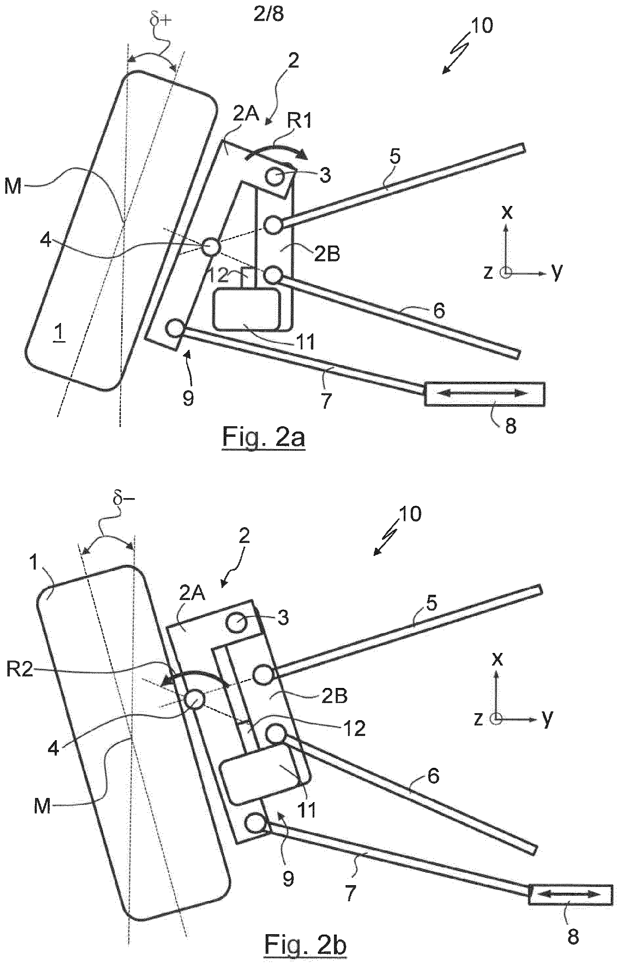

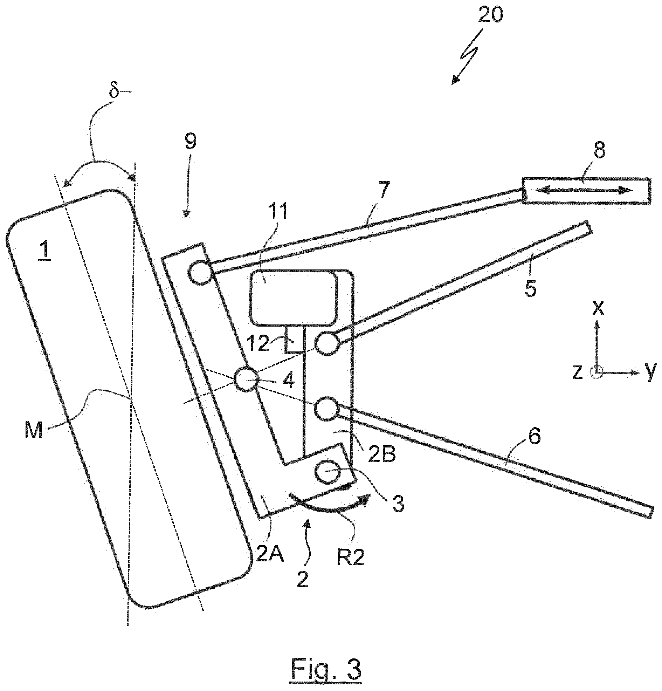

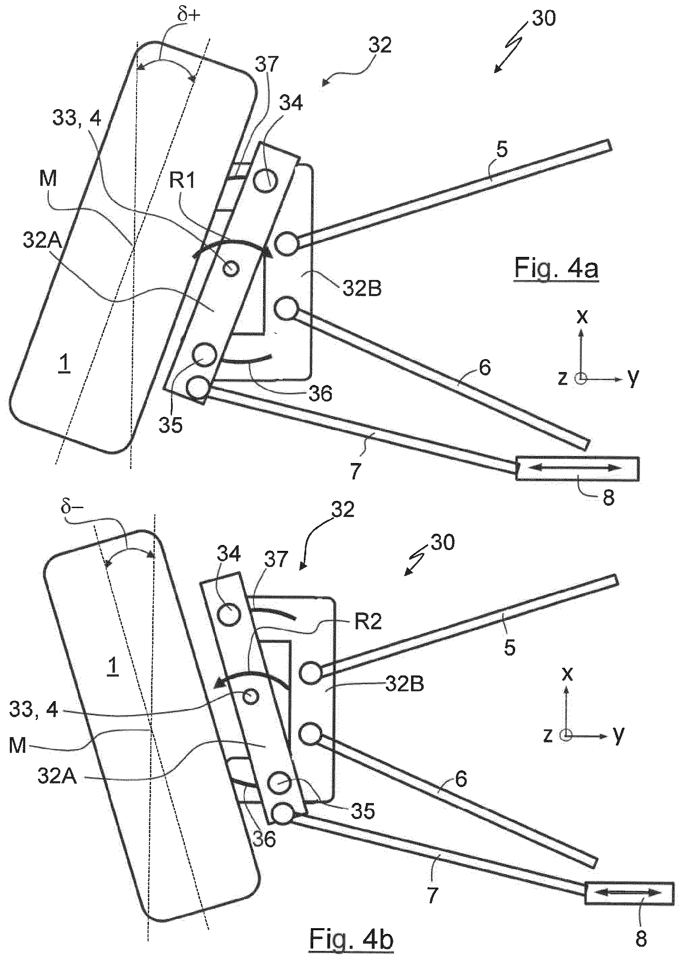

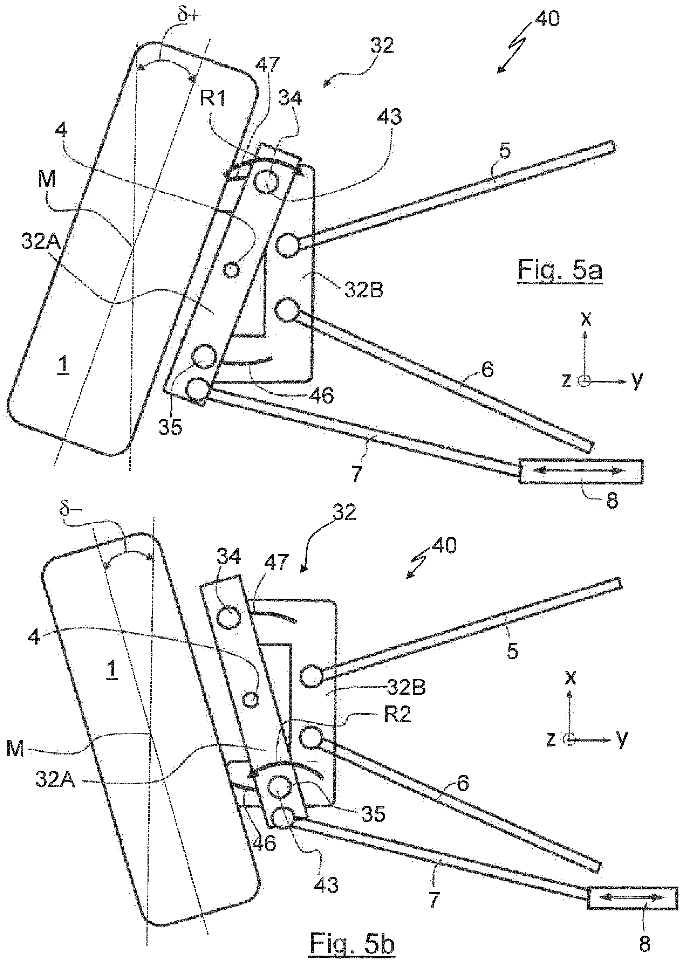

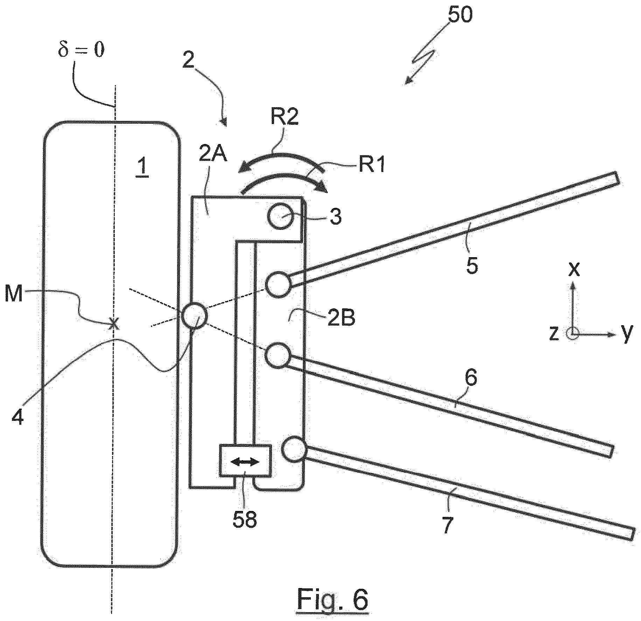

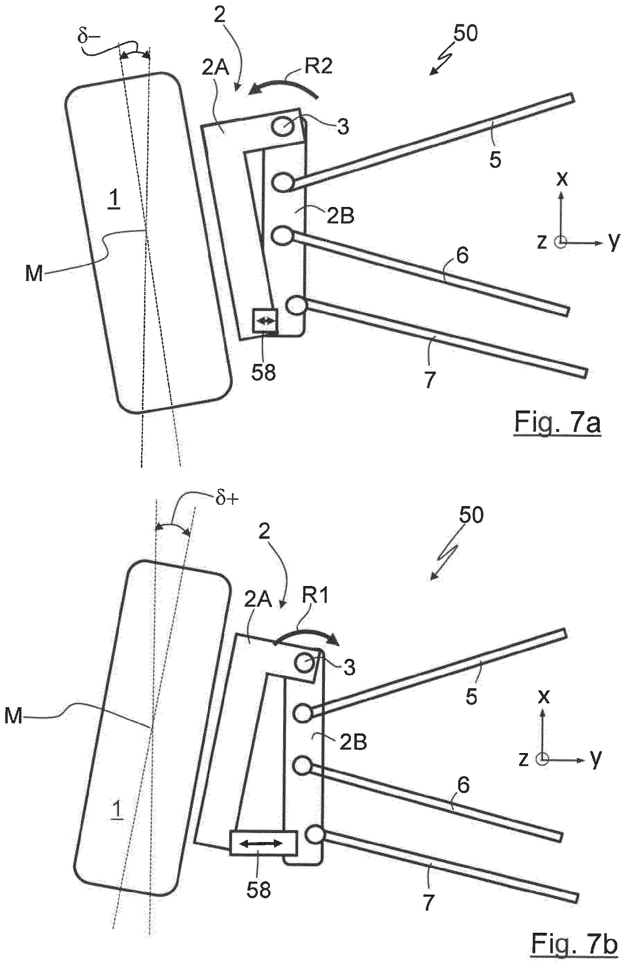

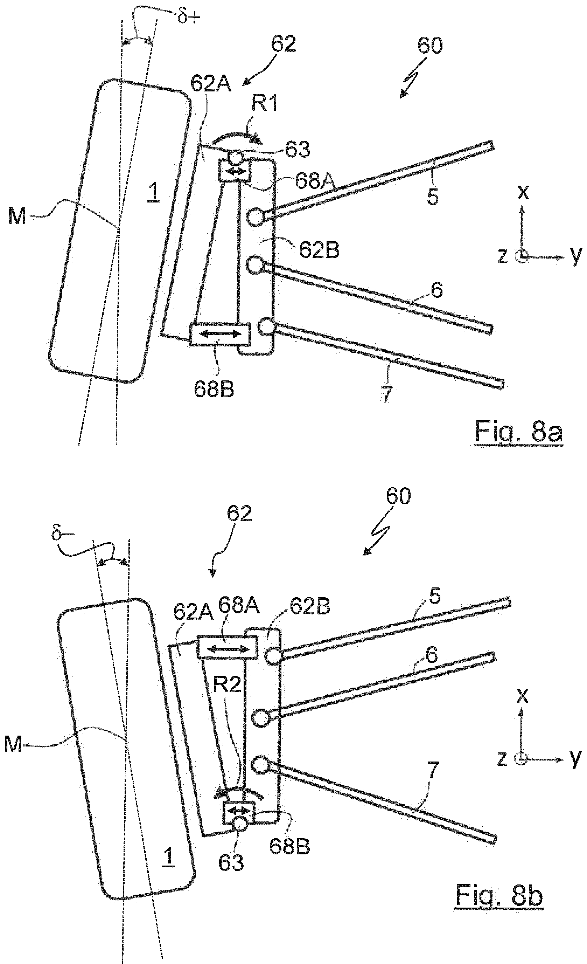

Im Folgenden werden fünf Beispiele weiter erläutert, wobei die Erfindung dazu in den beigefügten Zeichnungen schematisch dargestellt ist. **Fig. 1** zeigt ein erstes nicht erfindungsgemäßes Beispiel gemäß dem ersten Aspekt der Erfindung ausgebildeten Radaufhängung für ein linkes Hinterrad einer erfindungsgemäßen Achse eines erfindungsgemäßen Fahrzeugs in Geradeausstellung in Draufsicht, **Fig. 2a** in Draufsicht das Beispiel aus Fig. 1 mit aktiv in Vorspur gelenktem Rad und **Fig. 2b** in Draufsicht das Beispiel aus den Fig. 1 und 1a mit aktiv in Nachspur gelenktem Rad. **Fig. 3** zeigt, ebenfalls in Draufsicht, ein zweites Beispiel einer nicht erfindungsgemäßen gemäß dem ersten Aspekt der Erfindung ausgebildeten Radaufhängung für ein linkes Hinterrad einer nicht erfindungsgemäßen Achse eines nicht erfindungsgemäßen Fahrzeugs mit aktiv in Nachspur gelenktem Rad. **Fig. 4a** zeigt, ebenfalls in Draufsicht, ein erstes Ausführungsbeispiel einer erfindungsgemäßen, gemäß dem ersten Aspekt der Erfindung ausgebildeten Radaufhängung für ein linkes Hinterrad einer erfindungsgemäßen Achse eines erfindungsgemäßen Fahrzeugs mit aktiv in Vorspur gelenktem Rad und **Fig. 4b** in Draufsicht das Ausführungsbeispiel aus Fig. 4a mit aktiv in Nachspur gelenktem Rad. **Fig. 5a** zeigt, ebenfalls in Draufsicht, ein zweites, ähnlich dem ersten Ausführungsbeispiel ausgebildetes Ausführungsbeispiel einer erfindungsgemäßen, gemäß dem ersten Aspekt der Erfindung ausgebildeten Radaufhängung für ein linkes Hinterrad einer erfindungsgemäßen Achse eines erfindungsgemäßen Fahrzeugs mit aktiv in Vorspur gelenktem Rad und **Fig. 5b** in Draufsicht das Ausführungsbeispiel aus Fig. 5a mit aktiv in Nachspur gelenktem Rad. **Fig. 6** zeigt ein weiteres Beispiel einer nicht erfindungsgemäßen, jedoch gemäß dem zweiten Aspekt der Erfindung ausgebildeten Radaufhängung für ein linkes Hinterrad einer nicht erfindungsgemäßen Achse eines nicht erfindungsgemäßen Fahrzeugs in Geradeausstellung in Draufsicht, **Fig. 7a** in Draufsicht das Beispiel Fig. 6 mit aktiv in Nachspur gelenktem Rad und **Fig. 7b** in Draufsicht das Beispiel aus den Fig. 6 und 7a mit aktiv in Vorspur gelenktem Rad. **Fig. 8a** zeigt, ebenfalls in Draufsicht, ein weiteres Beispiel einer nicht erfindungsgemäßen, ebenfalls gemäß dem zweiten Aspekt der Erfindung ausgebildeten Radaufhängung für ein linkes Hinterrad einer nicht erfindungsgemäßen Achse eines nicht erfindungsgemäßen Fahrzeugs mit aktiv in Vorspur gelenktem Rad und **Fig. 8b** in Draufsicht das Beispiel aus Fig. 8a mit aktiv in Nachspur gelenktem Rad. Erfindungswesentlich können dabei sämtliche der beschriebenen Merkmale sein, sowie sämtliche der dargestellten Merkmale. Zu Gunsten eines besseren Verständnisses weisen funktionsgleiche Bauteile der einzelnen Ausführungsbeispiele die gleichen Bezugszeichen auf.

**Fig. 1** zeigt ein erstes Beispiel einer nicht erfindungsgemäßen, gemäß dem ersten Aspekt der Erfindung ausgebildeten Radaufhängung 10 für ein linkes Hinterrad 1 einer hier nicht dargestellten, nicht erfindungsgemäßen Achse eines ebenfalls nicht dargestellten, nicht erfindungsgemäßen zweispurigen PKWs in Geradeausstellung in Draufsicht, d.h. bei einem Spurwinkel von der δ = 0°, wobei die Radaufhängung dazu ausgebildet ist, das Hinterrad 1 zumindest geringfügig aktiv zu lenken.

Die Geradeausstellung ist vorliegend vereinfacht jeweils mit einem Spurwinkel von δ =0° bezeichnet, schließt jedoch sämtliche, in der Praxis üblichen Achseinstellungen mit von 0° abweichenden Spurwinkeln δ in Konstruktionslage mit ein. D.h. unter "Geradeausstellung" im Sinne der Erfindung wird jeweils der Radeinschlagwinkel verstanden, welcher sich in Konstruktionslage bei geradem Lenkrad, d.h. bei einem Soll-Lenkradwinkel von 0°, einstellt, auch wenn die sich dabei am Rad einstellenden Spurwinkel δ von 0° Grad abweichen.

Die nicht erfindungsgemäße Radaufhängung 10 weist einen Radträger 2 zur Aufnahme des Rades 1 sowie mehrere Lenker 5, 6 und 7 zur Anbindung des Radträgers 2 am Fahrzeugaufbau auf, insbesondere einen Spurlenker 7 sowie zwei weitere Lenker 5 und 6, welche in diesem Fall jeweils als Querlenker 5 und 6 dienen.

Der Radträger 2 ist zweiteilig ausgebildet und weist einen ersten Radträger-Teil 2A mit im Wesentlichen L-förmigen Querschnitt in Fahrzeughochrichtung z und einen zweiten Radträger-Teil 2B mit im Wesentlichen rechteckigem Querschnitt in z-Richtung auf, wobei das Hinterrad 1 am ersten Radträger-Teil 2A befestigt ist und der zweite Radträger-Teil 2B zumindest über die weiteren Lenker 5 und 6, d.h. zumindest über die beiden Querlenker 5 und 6, am Fahrzeugaufbau nicht aktiv lenkbar angebunden werden kann. Dabei sind die beiden weiteren Lenker 5 und 6 insbesondere zur Anbindung auf aus dem Stand der Technik bekannte und übliche Art und Weise an einem hier nicht dargestellten Hinterachsträger vorgesehen.

Ferner weist die nicht erfindungsgemäße Radaufhängung 10 zum aktiven Lenken des Rades 1 in eine erste Aktiv-Lenkrichtung R1 und in eine zweite Aktiv-Lenkrichtung R2 eine Aktuatoreinrichtung mit einem elektrisch antreibbaren Linearmotor als Aktuator 8 auf, wobei ein Lenkeinschlag des Rades 1 in die erste Aktiv-Lenkrichtung R1 ein Lenken des Rades in Vorspur bewirkt und zu Spurwinkeln δ+ führt und ein Lenkeinschlag des Rades 1 in die zweite Aktiv-Lenkrichtung R2 zu einem Lenken in Nachspur, d.h. zu Spurwinkeln δ-. Der Aktuator 8 ist ebenfalls zur Befestigung an dem hier nicht dargestellten Hinterachsträger ausgestaltet.

Der erste Radträger-Teil 2A und der zweite Radträger-Teil 2B sind mittels eines nicht näher bezeichneten, jeweils in den beiden Radträger-Teilen 2A und 2B beweglich gelagerten Bolzens, insbesondere mittels eines gleitgelagerten Bolzens, schwenkbeweglich um eine im Wesentlichen in Fahrzeughochrichtung z verlaufende Schwenkachse 3 miteinander verbunden, wobei der Bolzen, insbesondere die Schwenkachse 3, bei diesem Ausführungsbeispiel einer erfindungsgemäßen Radaufhängung 10 zumindest in einem ersten definierten Aktiv-Lenkwinkelbereich, insbesondere für das Lenken in die erste Aktiv-Lenkrichtung R1 ab der Geradeausstellung, d.h. ab einem Spurwinkel von δ = 0° hin in Richtung Vorspur δ+, eine erste Aktiv-Lenkachse 3 definiert.

Dies ist gut anhand der **Fig. 2a** und **2b** erkennbar, wobei Fig. 2a in Draufsicht das Beispiel aus Fig. 1 mit aktiv in Vorspur δ+ gelenktem Rad 1 zeigt und Fig. 2b, in Draufsicht das Ausführungsbeispiel aus den Fig. 1 und 1a mit aktiv in Nachspur δ- gelenktem Rad 1.

Die Schwenkachse 3, welche in diesem Fall mit der ersten Aktiv-Lenkachse 3 zusammenfällt, liegt bei dieser Radaufhängung 10 in Fahrzeuglängsrichtung x vor Radmitte M.

Zur Übertragung der von der Aktuatoreinrichtung, insbesondere dem Linearmotor 8, erzeugten Lenkkraft auf den Radträger 2, insbesondere auf den ersten Radträger-Teil 2A, ist bei dieser, gemäß dem ersten Aspekt der Erfindung ausgebildeten Radaufhängung 10 der Spurlenker 7 erfindungsgemäß radträgerseitig am ersten Radträger-Teil 2A angelenkt und fahrzeugaufbauseitig am Aktuator 8 angebunden, wobei der Spurlenker 7 in diesem Fall dabei, um einen möglichst großen Hebel zum aktiven Lenken zur Verfügung zu haben, in Fahrzeuglängsrichtung x hinter Radmitte M am Radträger 2 angelenkt ist, insbesondere an einem freien Ende 9 des ersten Radträger-Teils 2A. Die Anbindung des Spurlenkers in Fahrzeuglängsrichtung x hinter Radmitte M ist darüber hinaus aus Bauraumgründen vorteilhaft, da hinter Radmitte M in der Regel mehr Bauraum zur Verfügung steht als vor Radmitte M.

Die Anbindung des Spurlenkers 7 am Radträger 2 erfolgt dabei mittels eines aus dem Stand der Technik zur radträgerseitigen Anbindung des Spurlenkers am Radträger bekannten und üblicherweise verwendeten Gelenks.

Für eine besonders stabile Radaufhängung 10 weist dieses Beispiel einer nich erfindungsgemäßen Radaufhängung 10 eine am zweiten Radträger-Teil 2B befestigte Führungseinrichtung 11 auf, welche dazu ausgebildet ist, zumindest teilweise den ersten Radträger-Teil 2A, insbesondere dessen freies Ende 9, welches sich auf der von der Schwenkachse 3 abgewandten Seite am Radträger-Teil 2A befindet, zumindest teilweise beim aktiven Lenken zu führen. Dadurch kann, insbesondere im Bereich um die Geradeausstellung herum, d.h. um δ = 0° herum, (vgl. Fig. 1) sowie beim aktiven und/oder passiven Lenken in einem Spurwinkelbereich ausgehend von der Geradeausstellung δ = 0° in Richtung Nachspur δ-, eine besonders stabile Radführung erreicht werden, was besonders wichtig ist, da insbesondere bei sehr hohen Geschwindigkeiten, bei welchen sehr große Kräfte auf die Radaufhängung wirken, Spurwinkel δ um die Geradeausstellung auftreten.

Darüber hinaus weist die nicht erfindungsgemäße, in Fig. 1 bis 2b dargestellte Radaufhängung 10 einen Anschlag 12 auf, der durch ein Anschlagelement 12 in Form eines Gummipuffers gebildet ist und als mechanischer Anschlag dient und dazu vorgesehen ist, eine aktive Lenkbewegung um die erste Aktiv-Lenkachse 3 in die zweite Aktiv-Lenkrichtung R2, d.h. beim aktiven Lenken in Richtung Nachspur δ-, zu begrenzen, was anhand der Fig. 2a und 2b gut erkennbar ist.

In einem funktionsgemäßen Verwendungszustand der Radaufhängung 10 in einem Fahrzeug, insbesondere in einem zweispurigen Fahrzeug, können, der erste Radträger-Teil 2A und der zweite Radträger-Teil 2B mittels der Aktuatoreinrichtung, insbesondere mittels des Linearmotors 8, derart relativ zueinander bewegt werden, dass eine aktive Lenkbewegung des Rades 1 von wenigstens 7° um die erste Aktiv-Lenkachse 3, insbesondere von bis zu 10° um die erste Lenkachse 3 in die erste aktiv-Lenkrichtung R1 möglich ist, wobei dabei der Radträger 2 im Wesentlichen um die Schwenkachse 3 "aufklappt" und sich der erste Radträger-Teil 2A um die Schwenkachse 3 gegenüber dem zweiten Radträger-Teil 2B, welcher in einem funktionsgemäßen Verwendungszustand der Radaufhängung 10 nicht aktiv lenkbar am Fahrzeugaufbau befestigt ist, dreht, siehe Fig. 2a und 2b,

Eine Aktuatorbewegung in Fahrzeugquerrichtung y nach Fahrzeug außen, d.h. bezogen auf die Darstellung in den Fig. 1 bis 2b in Richtung Rad 1, bewirkt dabei ein "Aufklappen" des Radträgers 2 wie in beispielhaft in Fig. 2a dargestellt, und somit ein Lenken des linken Hinterrades 1 in Vorspur δ+, insbesondere in die erste Aktiv-Lenkrichtung R1, während eine Aktuatorbewegung in Fahrzeugquerrichtung y nach rechts, d.h. nach fahrzeuginnen, ein "Zuklappen" bewirkt und zu einem Lenken in die zweite Aktiv-Lenkrichtung R2 des Hinterrades 1 führt und damit einen Radeinschlag in Richtung Nachspur δ- bewirkt, wie beispielhalber in Fig. 2b dargestellt.

Erfolgt keine Relativbewegung der beiden Radträger-Teile 2A und 2B zueinander, erfolgt die Lenkbewegung des Rades 1 um eine zweite Lenkachse 4, wie bei einer herkömmlichen, aus dem Stand der Technik bekannten Radaufhängung mit einteilig ausgebildetem Radträger, wobei die Kinematik und Elastokinematik der Radaufhängung und/oder der Achse den Verlauf der zweiten Lenkachse 4 definieren.

Die in den Fig. 1 bis 2b dargestellte, erfindungsgemäße, gemäß dem ersten Aspekt der Erfindung ausgebildete Radaufhängung 10 ist dabei insbesondere derart ausgebildet, dass nach Erreichen des Anschlags 12, wobei der Anschlag 12 bei der Radaufhängung 10 bei Überschreiten eines definierten Nachspurwinkels δ- erreicht wird, der erste Radträger-Teil 2A und der zweite Radträger-Teil 2B, bei weiterem aktiven Lenken in die zweite Aktiv-Lenkrichtung R2, d.h. bei weiterem Lenken in Richtung Nachspur δ-, bis in eine Endposition des Aktuators 8 gemeinsam, d.h. wie ein einteiliger Radträger, um die zweite Lenkachse 4 schwenkbar sind, wobei die zweite Lenkachse 4 insbesondere durch die Geometrie und Elastokinematik der Radaufhängung 10 definiert ist und in diesem Fall eine zweite Aktiv-Lenkachse definiert. Dadurch verhält sich die Radaufhängung 10 nach Erreichen des Anschlags 12 bzw. wenn der erste Radträger-Teil 2A am Anschlag 12 anliegt, beim weiteren Lenken in Nachspur δ- sowohl bei weiterem, aktiven Lenken mittels der Aktuatoreinrichtung als auch bei weiterem passiven Lenken aufgrund äußerer wirkender Kräfte in Richtung Nachspur δ- wie eine konventionelle Radaufhängung mit einteiligem Radträger.

D.h., die Lenkbewegung um die zweite Lenkachse 4, ohne eine Relativbewegung der beiden Radträger-Teile 2A und 2B zueinander, kann dabei eine aktiv verursachte Lenkbewegung sein, d.h. eine mittels der Aktuatoreinrichtung 8 bewirkte Lenkbewegung sein, oder aber eine passive Lenkbewegung, verursacht durch äußere Kräfte und die Achskinematik und/oder Elastokinematik, und beispielsweise durch Lenkeffekte beim Ein- oder Ausfedern hervorgerufen werden, wobei die zweite Lenkachse 4 beim aktiven Lenken bei dieser Radaufhängung 10 erst nach Erreichen des Anschlags 12 bei weiterem Lenken in Nachspur δ- eine zweite Aktiv-Lenkachse 4 definiert.

Mit der nicht erfindungsgemäßen Radaufhängung 10 kann beim aktiven Lenken insbesondere beim aktiven Lenken in Vorspur δ+, die beim aktiven Lenken wirksame Lenkachse, in diesem Fall die erste Aktiv-Lenkachse 3, gegenüber der konventionellen, zweiten Lenkachse 4, welche beim passiven Lenken und/oder beim aktiven Lenken, wenn der erste Radträger-Teil 2A und der zweite Radträger-Teil 2B nicht relativ zueinander bewegt werden, die Lenkachse darstellt, in Fahrzeuglängsrichtung x weiter nach vorne und in Fahrzeugquerrichtung weiter nach innen verlagert werden, wodurch sich andere Bauraumverhältnisse beim Radeinschlag ergeben. Bei entsprechender konstruktiver Ausgestaltung einer erfindungsgemäßen Radaufhängung 10 kann dadurch der verfügbare Bauraum zugunsten größerer Radeinschlagwinkel besser ausgenutzt werden. Insbesondere lassen sich größere Radeinschlagwinkel bzw. Spurwinkel, vor allem beim Lenken in Vorspur δ+, realisieren. Dadurch wiederum kann eine deutliche Reduzierung des Wendekreises erreicht werden.

**Fig. 3** zeigt, ebenfalls in Draufsicht, ein zweites Beispiel einer nicht erfindungsgemäßen, gemäß dem ersten Aspekt der Erfindung ausgebildeten Radaufhängung 20, welche ebenfalls für ein linkes Hinterrad einer erfindungsgemäßen Achse eines erfindungsgemäßen Fahrzeugs vorgesehen ist, wobei die Radaufhängung 20 in Fig. 3 mit aktiv in Nachspur δ- gelenktem Hinterrad 1 dargestellt ist.

Dieses Beispiel einer nicht erfindungsgemäßen Radaufhängung 20, unterscheidet sich von der anhand der Fig. 1 bis 2b zuvor beschriebenen, nicht erfindungsgemäßen Radaufhängung 10 dadurch, dass bei dieser Radaufhängung 20 die Schwenkachse 3, welche die erste Aktiv-Lenkachse 3 definiert, in Fahrzeuglängsrichtung x hinter Radmitte M angeordnet ist, und der Spurlenker 7 sowie die Aktuatoreinrichtung mit dem Aktuator 8 jeweils in Fahrzeuglängsrichtung x vor Radmitte M angeordnet sind. Entsprechend sind auch die Führungseinrichtung 11 sowie der Anschlag 12 in Fahrzeuglängsrichtung x vor Radmitte M angeordnet.

Diese Ausgestaltung einer nicht erfindungsgemäßen Radaufhängung 20, funktioniert nach demselben Prinzip wie die zuvor anhand der Fig. 1 bis 2b beschriebene erfindungsgemäße Radaufhängung 10, lediglich mit dem Unterschied, dass der Anschlag 12 das aktive Lenken in Richtung Vorspur δ+ begrenzt und nicht in Nachspur und dass der erste Radträger-Teil 2A und der zweite Radträger-Teil 2B erst bei Überschreiten eines definierten Aktiv-Lenkwinkelbereichs in Vorspur δ+, d.h. für Spurwinkel δ oberhalb davon, bei weiterem Lenken in Vorspur δ+ gemeinsam um die zweite Lenkachse 4 bewegt werden können. D.h. die Radaufhängung 20 verhält sich somit nach Erreichen des Anschlags 12 und bei weiterem Lenken in Vorspur δ+ wie eine vergleichbare, herkömmliche Radaufhängung mit einteiligem Radträger.

Die **Fig. 4a** und **4b** zeigen ein erstes Ausführungsbeispiel einer erfindungsgemäßen Radaufhängung 30 für ein linkes Hinterrad 1 einer erfindungsgemäßen Achse eines erfindungsgemäßen Fahrzeugs, wobei diese Radaufhängung 30 ebenfalls gemäß dem ersten Aspekt der Erfindung ausgebildet ist und demzufolge der Spurlenker 7 ebenfalls erfindungsgemäß am ersten Radträger-Teil 32A angelenkt ist, wobei Fig. 4a die erfindungsgemäße Radaufhängung 30 in Draufsicht mit aktiv in Vorspur δ+ gelenktem Rad zeigt und Fig. 4b, die Erfindung gemäß Radaufhängung 30 mit aktiv in Nachspur δ- gelenktem Rad 1.

Wie bei dem anhand der Fig. 1 bis 2b beschriebenen Beispiel einer nicht erfindungsgemäßen Radaufhängung 10 ist auch bei der in den Fig. 4a und 4b dargestellten, erfindungsgemäßen Radaufhängung 30 der Spurlenker 7 radträgerseitig jeweils am ersten Radträger-Teil 32A in Fahrzeuglängsrichtung x hinter Radmitte M angeordnet.

Die Aktuatoreinrichtung mit dem Aktuator 8, welcher ebenfalls in diesem Fall ein elektrisch antreibbarer Linearmotor 8 ist, ist ebenfalls zur Anbindung in Fahrzeuglängsrichtung x hinter Radmitte M vorgesehen, insbesondere ebenfalls zur Anbindung am Hinterachsträger.

Bei dieser Radaufhängung 30, weist der erste Radträger-Teil 32A jedoch statt eines L-förmigen Querschnitts in z-Richtung wie bei den zuvor beschriebenen Radaufhängungen 10 und 20 einen im Wesentlichen rechteckigen Querschnitt auf, und der zweite Radträger-Teil 32B weist statt eines im Wesentlichen rechteckigen Querschnitts in z-Richtung einen im Wesentlichen U-förmigen Querschnitt auf.

Des Weiteren unterscheidet sich diese Radaufhängung 30 von den beiden zuvor beschriebenen, nicht erfindungsgemäßen Radaufhängungen 10 und 20 dadurch, dass der erste Radträger-Teil 32A und der zweite Radträger-Teil 32B nicht mittels eines Bolzens schwenkbeweglich um eine Schwenkachse 3 miteinander verbunden sind, sondern jeweils mittels zweier Kopplungseinrichtungen 34 und 37 bzw. 35 und 36 in Form von Kulissenführungen, welche jeweils durch einen Kulissen-Führungsbolzen 34 bzw. 35 sowie durch entsprechend korrespondierend ausgebildete Kulissen-Führungsnuten 36 bzw. 37 gebildet sind.

Die Kulissen-Führungsnuten 36 und 37 sind dabei jeweils zur Führung des zugehörigen Kulissen-Führungsbolzen 34 bzw. 35 ausgebildet und führen die zugehörigen Kulissen-Führungsbolzen 34 bzw. 35 insbesondere bei einer Verlagerung bzw. Bewegung dieser in Fahrzeugquerrichtung y und damit bei einer Verlagerung bzw. Bewegung des ersten Radträger-Teils 32A, wobei die Kulissen-Führungsnuten 36 und 37 dabei einen leicht gekrümmten Verlauf aufweisen, vorzugsweise einen kreisbogenförmigen Verlauf, wobei ein Krümmungsmittelpunkt in Fahrzeuglängsrichtung x insbesondere jeweils zwischen den beiden Kulissen-Führungsnuten 37 und 36 liegt, vorzugsweise auf Höhe Radmitte M. Besonders bevorzugt fallen dabei die beiden Krümmungsmittelpunkte der beiden Kulissen-Führungsnuten 37 und 36 dabei zusammen und definieren insbesondere die Aktiv-Lenkachse 33.

Ein weiterer Unterschied dieser Radaufhängung 30 gegenüber den zuvor beschriebenen Beispiel ist, dass bei dieser Radaufhängung 30 die Achsgeometrie, Achskinematik und Elastokinematik derart gewählt sind, dass die Aktiv-Lenkachse 33 auch jeweils nach Erreichen der Anschläge in den Kulissenführungen, insbesondere auch nach Erreichen des Endes wenigstens einer Kulissen-Führungsnut 37 und/oder 36, diejenige Lenkachse 33 ist, um welche sich jeweils der gesamte Radträger 32 bei weiterem, aktiven und/oder passiven Lenken bewegt. D.h. die erste Aktiv-Lenkachse 33 definiert bei diesem Ausführungsbeispiel auch die zweite Lenkachse 4. Es versteht sich von selbst, dass bei anderen geometrischen Abmessungen der beiden Radträger-Teile 32A und 32 B sowie einer anderen Ausgestaltung der beiden Kopplungseinrichtungen, insbesondere der beiden Kulissenführungen, die Lenkachse 33 in Fahrzeuglängsrichtung X weiter vorne oder weiter hinten liegen kann und auch von der zweiten Lenkachse 4 verschieden sein kann, wobei bei der in den Fig. 4a und 4b dargestellten erfindungsgemäßen Radaufhängung, 30 die Aktiv-Lenkachse 33 sowie die zweite Lenkachse 4 in etwa auf Höhe Radmitte M liegen.

**Fig. 5a** zeigt ein zweites, ähnlich dem ersten Ausführungsbeispiel ausgebildetes Ausführungsbeispiel einer erfindungsgemäßen, gemäß dem ersten Aspekt der Erfindung ausgebildeten Radaufhängung 40 für ein linkes Hinterrad 1 einer erfindungsgemäßen Achse eines erfindungsgemäßen Fahrzeugs mit aktiv in Vorspur δ+ gelenktem Rad 1 und **Fig. 5b** in Draufsicht das Ausführungsbeispiel aus Fig. 5a mit aktiv in Nachspur gelenktem Rad 1.

Die Radaufhängung 40 aus den Fig. 5a und 5b unterscheidet sich dabei darin von der anhand der Fig. 4a und 4b beschriebenen Radaufhängung 30, dass bei der in den Fig. 5a und 5b abgebildeten Radaufhängung 40 die Kulissen-Führungsnuten 46 und 47 jeweils derart ausgebildet sind, dass beim Lenken in Vorspur δ+ die erste Aktiv-Lenkachse 43, d.h. die beim aktiven Lenken in Vorspur δ+ wirkende Lenkachse, vor Radmitte M liegt, insbesondere im Bereich des Kulissen-Führungsbolzens 34 und mit dessen Längsachse zusammenfällt, und dass beim aktiven Lenken in Nachspur δ- die erste Aktiv-Lenkachse 43, d.h. die beim aktiven Lenken in Nachspur δ- wirkende Lenkachse, hinter Radmitte M liegt, insbesondere im Bereich des Kulissen-Führungsbolzens 35 und mit dessen Längsachse zusammenfällt, während bei der Radaufhängung 30 die erste Aktiv-Lenkachse 33 auf Höhe Radmitte liegt.

Durch die Anordnung der ersten Aktiv-Lenkachse 43 jeweils deutlich vor Radmitte M beim aktiven Lenken in Vorspur d+ und/oder deutlich hinter Radmitte M beim Lenken in Nachspur d- können größere Bauraumvorteile erzielt werden, als mit der anhand der Fig. 4a und 4b beschriebenen erfindungsgemäßen Radaufhängung 30, insbesondere im Bereich einer fahrzeuginnenseitigen Radvorderkante.

Die gegenüber der Radaufhängung 30 andere Lage der ersten-Aktivlenkachse 43 der Radaufhängung 40 kann dabei durch eine andere, entsprechend geeignete Ausgestaltung der Kulissen-Führungsnuten 46 und 47 erreicht werden. Eine Möglichkeit einer entsprechend geeigneten Ausgestaltung besteht darin, die Kulissen-Führungsnuten 46 und 47 jeweils derart auszugestalten, dass ausgehend von der Geradeausstellung eine Bewegung des zugehörigen Kulissen-Führungsbolzens 34 bzw. 35 in der jeweiligen Führungsnut 47 bzw. 46 jeweils nur in Richtung fahrzeugaußen möglich ist. D.h. vorzugsweise sind die Kulissen-Führungsnuten 47 und 46 derart ausgestaltet, dass sich die zugehörigen Kulissen-Führungsbolzen 34 und 35 in Geradeausstellung jeweils am fahrzeuginnenseitigen Ende der Kulissen-Führungsnuten 47 bzw. 46 befinden, d.h. jeweils an einem fahrzeuginnenseitigen Endanschlag der zugehörigen Kulissen-Führungsnuten 47 bzw. 46.

Nach Erreichen des maximal möglichen, durch aktives Lenken einstellbaren Vorspur- und/oder Nachspurwinkels δ+ bzw. δ-, ist das Rad 1 einer erfindungsgemäßen Radaufhängung 40 vorzugsweise wie bei einer konventionellen Achse elastokinematisch um die zweite Lenkachse 4 lenkbar bzw. schwenkbar, wobei sich auch in diesem Fall beim passiven Lenken beide Radträger-Teile 32A und 32B gemeinsam um die zweite Lenkachse 4 bewegen.

**Fig. 6** zeigt ein weiteres Beispiel einer nicht erfindungsgemäßen Radaufhängung 50 für ein linkes Hinterrad einer erfindungsgemäßen Achse eines erfindungsgemäßen Fahrzeugs in Geradeausstellung mit δ = 0° in Draufsicht, wobei die Radaufhängung 50 gemäß dem zweiten Aspekt der Erfindung ausgebildet ist.

Nicht erfindugsgemäß ist der Spurlenker 7 radträgerseitig am zweiten Radträger-Teil 2B angebunden und der erste Radträger-Teil 2A und der zweite Radträger-Teil 2B sind durch einen Aktuator 58 miteinander gekoppelt, insbesondere direkt durch den Aktuator 58 miteinander verbunden, wobei der Aktuator 48 ebenfalls ein elektrisch angetriebene Linearmotor ist.

Ansonsten entspricht die Radaufhängung 50 aus Fig. 6 der Radaufhängung 10 aus den Fig. 1 bis 2b. Insbesondere sind der erste Radträger-Teil 2A und der zweite Radträger-Teil 2B ebenfalls wie bei dem ersten Ausführungsbeispiel einer erfindungsgemäßen Radaufhängung 10 ausgebildet und ebenfalls mittels eines Bolzens schwenkbeweglich um eine Schwenkachse 3, welche eine erste Aktiv-Lenkachse 3 definiert, miteinander verbunden.

Anhand der **Fig. 7a** und **7b** ist gut erkennbar, wie bei der nicht erfindungsgemäßen Radaufhängung 50 aus Fig. 6 mittels des Aktuators 58 jeweils ein aktives Lenken bewirkbar ist, wobei die Schwenkachse 3 dabei sowohl beim aktiven Lenken in Vorspur δ+ als auch beim aktiven Lenken in Nachspur δ- ausgehend von der Geradeausstellung δ = 0 jeweils die erste Aktiv-Lenkachse 3 bildet. Nach Erreichen eines in den Fig. 7a bis 7b jeweils nicht dargestellten Anschlags (vgl. Fig. 1 bis 2b), insbesondere eines jeweils mechanischen Anschlags des Aktuators 58, sind beim passiven Lenken beide Radträger-Teile 2A und 2B gemeinsam, insbesondere ohne eine Relativbewegung zueinander, ebenfalls um eine zweite, nicht eingezeichnete Lenkachse, welche insbesondere nicht mit der ersten Aktiv-Lenkachse 3 zusammenfällt, sondern sich etwa auf Höhe Radmitte M befindet, wie bei dem ersten Ausführungsbeispiel einer erfindungsgemäßen Radaufhängung 10, schwenkbar, wie beim ersten Ausführungsbeispiel einer erfindungsgemäßen Radaufhängung 10.

**Fig. 8a und 8b** zeigen, ebenfalls in Draufsicht, ein weiteres Beispiel einer nicht erindungsgemäßen, ebenfalls gemäß dem zweiten Aspekt der Erfindung ausgebildeten Radaufhängung 60 für ein linkes Hinterrad einer erfindungsgemäßen Achse eines erfindungsgemäßen Fahrzeugs, wobei die erfindungsgemäße Radaufhängung 60 in Fig. 8a mit aktiv in Vorspur δ+ gelenktem Rad 1 dargestellt ist und in Fig. 8b mit aktiv in Nachspur δ-gelenktem Rad 1. Wie bei dem anhand der Fig. 7a und 7b beschriebenen vierten Ausführungsbeispiel einer erfindungsgemäßen Radaufhängung 50 ist auch bei diesem Ausführungsbeispiel der Spurlenker 7 erfindungsgemäß radträgerseitig am zweiten Radträger-Teil 62B angelenkt und dazu vorgesehen, unmittelbar am Fahrzeugaufbau bzw. am Hinterachsträger angebunden zu werden.

Bei diesem Beispiel einer nicht erfindungsgemäßen Radaufhängung, 60 weisen beide Radträger-Teile 62A und 62B jeweils einen in Fahrzeughochrichtung z im Wesentlichen rechteckigen Querschnitt auf, wobei die beiden Radträger-Teile 62A und 62 B direkt mittels zweier Aktuatoren 68A und 68B miteinander gekoppelt sind und insbesondere direkt miteinander verbunden sind.

Die beiden Aktuatoren 68A und 68B sind bei dieser Radaufhängung 60 dabei derart ausgebildet, dass sie jeweils außerdem eine Funktion als Führungseinrichtung sowie darüber hinaus eine Funktion als Kopplungseinrichtung erfüllen, d.h. sie dienen nicht nur zum Erzeugen der aktiven Lenkbewegung, sondern übernehmen auch die Funktion der Führungseinrichtung 11, welche anhand der Radaufhängung 10 beschrieben worden ist, sowie die Führung des ersten Radträger-Teils 62A beim Verlagern relativ zum zweiten Radträger-Teil 62B.

In einigen Anwendungsfällen, insbesondere bei größeren auftretenden Radkräften, kann es jedoch vorteilhafter sein, die Führungsfunktion und/oder die Kopplungsfunktion von der Aktuatorfunktion zu trennen und zur Abstützung der auftretenden Radkräfte jeweils neben wenigstens einem Aktuator zusätzlich wenigstens eine Führungseinrichtung und/oder eine Kopplungseinrichtung, insbesondere eine wenigstens eine Kulissenführung, vorzusehen. Dadurch kann die Aktuatoreinrichtung, insbesondere wenigstens ein Aktuator von den auftretenden Radkräften entlastet werden.

Wie anhand der Fig. 8a und 8b gut erkennbar ist, ist dieses Beispiel einer nicht erfindungsgemäßen Radaufhängung 60 dabei derart ausgebildet dass beim aktiven Lenken in Vorspur δ+ der erste Radträger-Teil 62A um eine Aktiv-Lenkachse 63 schwenkbeweglich ist, welche in Fahrzeuglängsrichtung x vor Radmitte liegt, während beim aktiven Lenken in Nachspur δ-, insbesondere jeweils ausgehend von der Geradeausstellung, d.h. jeweils ausgehend von δ = 0, die Aktiv-Lenkachse 63 in Fahrzeuglängsrichtung x hinter Radmitte liegt, wobei bei diesem Ausführungsbeispiel einer erfindungsgemäßen Radaufhängung, 60 die erste Aktiv-Lenkachse 63 in Fahrzeuglängsrichtung x grundsätzlich veränderlich ist, jeweils in Abhängigkeit der Zustände der beiden Aktuatoren 68A und 68B, insbesondere abhängig von dem Aktuatorzustand des ersten Aktuators 68A im Verhältnis zum Aktuatorzustand des zweiten Aktuators 68B.

Um die Auslegung der Kinematik und Elastokinematik der Radaufhängung 60 jedoch so einfach wie möglich zu gestalten, ist es besonders vorteilhaft, wenn ausgehend von der Geradeausstellung, d.h. δ = 0°, eine aktive Lenkbewegung zum Lenken in Vorspur δ+ nur mit dem in diesem Fall hinter Radmitte M angeordneten Aktuator 68B bewirkt wird und zum aktiven Lenken in Nachspur δ-die Lenkbewegung nur mit dem in diesem Fall vor Radmitte M angeordneten Aktuator 68A bewirkt wird, sodass sich beim aktiven Lenken in Vorspur δ+ ausgehend von der Geradeausstellung δ = 0° die erste aktiv-Lenkachse 63, wie in Fig. 8a dargestellt, deutlich vor Radmitte M einstellt, und insbesondere auf Höhe des vorderen Aktuators 68A befindet, und sich beim Lenken in Nachspur δ- ausgehend von der Geradeausstellung δ = 0° die erste aktiv-Lenkachse 63 hinter Radmitte M einstellt, wie in Fig. 8b angedeutet, insbesondere in etwa auf Höhe des zweiten Aktuators 68B.

Wie bei dem vorigen, anhand der Fig. 7a und 7b beschriebenen Beispiele einer nicht erfindungsgemäßen Radaufhängung 50, weist auch die in den Fig. 8a und 8b dargestellte nicht erfindungsgemäße Radaufhängung 60 jeweils eine zweite, hier ebenfalls nicht eingezeichnete Lenkachse auf, um welche jeweils beim passiven Lenken eine Schwenkbewegung beider Radträger-Teile 62A und 62B gemeinsam erfolgt.

Selbstverständlich ist eine Vielzahl an Abwandlungen, insbesondere von konstruktiven Abwandlungen, zu den erläuterten Ausführungsbeispielen möglich, ohne den Inhalt der Patentansprüche zu verlassen.

### Bezugszeichenliste:

- 10, 20, 30,: erfindungsgemäße Radaufhängung
- 40, 50, 60 1: Rad
- 2, 32, 62: Radträger
- 2A, 32A, 62A: erster Radträger-Teil
- 2B, 32B, 62B: zweiter-Radträger-Teil
- 3, 33, 43, 63: Schwenkachse, erste Aktiv-Lenkachse
- 4: zweite Aktiv-Lenkachse
- 5: weiterer Lenker
- 6: weiterer Lenker
- 7: Spurlenker
- 8, 58, 68A, 68B: Aktuator
- 9: freies Ende des ersten Radträger-Teils
- 11: Führungseinrichtung
- 12: Anschlagelement
- 34: Kulissen-Führungsbolzen
- 35: Kulissen-Führungsbolzen
- 36, 46: Kulissen-Führungsnut
- 37, 47: Kulissen-Führungsnut
- M: Radmitte
- R1: erste Aktiv-Lenkrichtung
- R2: zweite Aktiv-Lenkrichtung
- x: Fahrzeuglängsrichtung
- y: Fahrzeugquerrichtung
- z: Fahrzeughochrichtung
- δ: Spurwinkel
- δ = 0: Spurwinkel bei Geradeausstellung
- δ+: Spurwinkel bei Vorspur
- δ-: Spurwinkel bei Nachspur

## Patentansprüche

1. Radaufhängung (10, 20, 30) für ein zumindest geringfügig aktiv lenkbares Hinterrad (1) eines zweispurigen Fahrzeugs,
- wobei die Radaufhängung (10, 20, 30) einen Radträger (2, 32) zur Aufnahme des Rades (1), einen Spurlenker (7) und wenigstens einen weiteren Lenker (5, 6) zur Anbindung des Radträgers (2, 32) am Fahrzeugaufbau und eine Aktuatoreinrichtung mit wenigstens einem Aktuator (8) zum aktiven Lenken des Rades (1) in eine erste Aktiv-Lenkrichtung (R1) und in eine zweite Aktiv-Lenkrichtung (R2) aufweist,
- wobei der Radträger (2, 32) wenigstens zweiteilig ausgebildet ist und einen ersten Radträger-Teil (2A, 32A) und einen zweiten Radträger-Teil (2B, 32B) aufweist,
- wobei der erste Radträger-Teil (2A, 32A) zur Aufnahme des Rades (1) ausgebildet ist und der zweite Radträger-Teil (2B, 32B) über wenigstens einen der weiteren Lenker (5, 6) am Fahrzeugaufbau anbindbar und nicht aktiv lenkbar ist,
- wobei der erste Radträger-Teil (2A, 32A) und der zweite Radträger-Teil (2B, 32B) in einem funktionsgemäßen Verwendungszustand der Radaufhängung (10, 20, 30) in einem Fahrzeug mittels der Aktuatoreinrichtung derart relativ zueinander bewegbar sind, dass eine aktive, zumindest geringfügige Lenkbewegung des Rades (1) bewirkbar ist, und
- wobei der Spurlenker (7) radträgerseitig am ersten Radträger-Teil (2A, 32A) angelenkt ist und wenigstens ein Aktuator (8) der Aktuatoreinrichtung über den Spurlenker (7) mit dem ersten Radträger-Teil (2A, 32A) gekoppelt ist, wobei wenigstens ein Aktuator (8) der Aktuatoreinrichtung über den Spurlenker (7) am ersten Radträger-Teil (2A, 32A) angebunden ist,
- wobei der erste Radträger-Teil (32A) und der zweite Radträger-Teil (32B) mittels zweier Kopplungseinrichtungen (34, 37; 35, 36) mechanisch miteinander verbunden sind, welche dazu eingerichtet sind, den ersten Radträger-Teil (32A) und den zweiten Radträger-Teil (32B) beim aktiven Lenken jeweils gegenläufig in Fahrzeugquerrichtung (y) zu führen, wobei eine Relativbewegung der beiden Radträger-Teile (32A, 32B) zueinander eine Lenkbewegung des Rades (1) um eine Aktiv-Lenkachse (33) bewirkt, wobei die Aktiv-Lenkachse (33) in Fahrzeuglängsrichtung (x) zwischen den beiden Kopplungseinrichtungen (34, 37; 35, 36) liegt,
- wobei beide Kopplungseinrichtungen (34, 37; 35, 36) eine Kulissenführung (34, 37; 35, 36) aufweisen oder durch eine Kulissenführung (34, 37; 35, 36) gebildet sind, welche Kulissenführung (34, 37, 35, 36) jeweils durch einen Kulissen-Führungsbolzen (34, 35) sowie durch entsprechend korrespondierend ausgebildete Kulissen-Führungsnuten (36, 37) gebildet sind und wobei die Kulissen-Führungsnuten (36, 37) dabei einen gekrümmten Verlauf aufweisen, wobei ein Krümmungsmittelpunkt in Fahrzeuglängsrichtung (x) jeweils zwischen den beiden Kulissen-Führungsnuten (37, 36) liegt.

2. Radaufhängung (40, 50) für ein zumindest geringfügig aktiv lenkbares Hinterrad (1) eines zweispurigen Fahrzeugs,
- wobei die Radaufhängung (40, 50) einen Radträger (2, 52) zur Aufnahme des Rades (1), einen Spurlenker (7) und wenigstens einen weiteren Lenker zur Anbindung des Radträgers (2, 52) am Fahrzeugaufbau und eine Aktuatoreinrichtung mit wenigstens einem Aktuator (48, 58A, 58B) zum aktiven Lenken des Rades (1) in eine erste Aktiv-Lenkrichtung (R1) und in eine zweite Aktiv-Lenkrichtung (R2) aufweist,
- wobei der Radträger (2, 52) wenigstens zweiteilig ausgebildet ist und einen ersten Radträger-Teil (2A, 52A) und einen zweiten Radträger-Teil (2B, 52B) aufweist,
- wobei der erste Radträger-Teil (2A, 52A) zur Aufnahme des Rades (1) ausgebildet ist und der zweite Radträger-Teil (2B, 52B) über wenigstens einen Lenker (5, 6, 7) am Fahrzeugaufbau anbindbar ist,
- wobei der erste Radträger-Teil (2A, 52A) und der zweite Radträger-Teil (2B, 52B) in einem funktionsgemäßen Verwendungszustand der Radaufhängung (40, 50) in einem Fahrzeug mittels der Aktuatoreinrichtung derart relativ zueinander bewegbar sind, dass eine aktive, zumindest geringfügige Lenkbewegung des Rades (1) bewirkbar ist, und
- wobei der Spurlenker (7) radträgerseitig am zweiten Radträger-Teil (2B, 52B) angelenkt ist und wenigstens ein Aktuator (48, 58A, 58B) der Aktuatoreinrichtung den ersten Radträger-Teil (2A, 52A) mit dem zweiten Radträger-Teil (2B, 52B) koppelt,
- wobei der erste Radträger-Teil (32A) und der zweite Radträger-Teil (32B) mittels zweier Kopplungseinrichtungen (34, 37; 35, 36) mechanisch miteinander verbunden sind, welche dazu eingerichtet sind, den ersten Radträger-Teil (32A) und den zweiten Radträger-Teil (32B) beim aktiven Lenken jeweils gegenläufig in Fahrzeugquerrichtung (y) zu führen, wobei eine Relativbewegung der beiden Radträger-Teile (32A, 32B) zueinander eine Lenkbewegung des Rades (1) um eine Aktiv-Lenkachse (33) bewirkt, wobei die Aktiv-Lenkachse (33) in Fahrzeuglängsrichtung (x) zwischen den beiden Kopplungseinrichtungen (34, 37; 35, 36) liegt,
- wobei beide Kopplungseinrichtungen (34, 37; 35, 36) eine Kulissenführung (34, 37; 35, 36) aufweisen oder durch eine Kulissenführung (34, 37; 35, 36) gebildet sind, welche Kulissenführung (34, 37, 35, 36) jeweils durch einen Kulissen-Führungsbolzen 34 bzw. 35 sowie durch entsprechend korrespondierend ausgebildete Kulissen-Führungsnuten 36 bzw. 37 gebildet sind und wobei die Kulissen-Führungsnuten 36 und 37 dabei einen gekrümmten Verlauf aufweisen, wobei ein Krümmungsmittelpunkt in Fahrzeuglängsrichtung (x) jeweils zwischen den beiden Kulissen-Führungsnuten 37 und 36 liegt.

3. Radaufhängung (10, 20, 30, 40, 50) nach Anspruch 2, **dadurch gekennzeichnet, dass** wenigstens ein Aktuator (48, 58A, 58B) der Aktuatoreinrichtung am ersten Radträger-Teil (2A, 52A) und am zweiten Radträger-Teil (2B, 52B) angebunden ist und zumindest teilweise in Fahrzeugquerrichtung (y) zwischen dem ersten Radträger-Teil (2A, 52A) und dem zweiten Radträger-Teil (2B, 52B) angeordnet ist.

4. Radaufhängung (10, 20, 30, 40, 50) nach einem der vorgenannten Ansprüche, **dadurch gekennzeichnet, dass** der erste Radträger-Teil (2A, 32A, 52A) und der zweite Radträger-Teil (2B, 32B, 52B) schwenkbeweglich um eine im Wesentlichen in Fahrzeughochrichtung (z) verlaufende Schwenkachse (3, 33, 53) miteinander verbunden sind, welche zumindest in einem ersten definierten Aktiv-Lenkwinkelbereich und/oder für die erste Aktiv-Lenkrichtung (R1) eine Aktiv-Lenkachse (3, 33, 53) definiert.

5. Radaufhängung (10, 30, 50) nach Anspruch 4, **dadurch gekennzeichnet, dass** die Schwenkachse (3, 33, 53) in Fahrzeuglängsrichtung (x) vor Radmitte (M) liegt.

6. Radaufhängung (10, 30, 40, 50) nach einem der vorgenannten Ansprüche, **dadurch gekennzeichnet, dass** der Spurlenker (7) in Fahrzeuglängsrichtung (x) hinter Radmitte (M) am Radträger (2, 32, 52) angelenkt ist.

7. Radaufhängung (10, 20, 30, 40, 50) nach einem der vorgenannten Ansprüche, insbesondere nach Anspruch 1, **dadurch gekennzeichnet, dass** wenigstens ein Radträger-Teil (2B, 32B, 52B) eine Führungseinrichtung (11, 48, 58A, 58B) zur zumindest teilweisen Führung des anderen Radträger-Teils (2A, 32A, 52A) aufweist, zur Führung des von der Schwenkachse (3, 33, 53) abgewandten freien Endes (9) des anderen Radträger-Teils (2A, 32A, 52A).

8. Radaufhängung (10, 20, 30, 40, 50) nach einem der vorgenannten Ansprüche, **dadurch gekennzeichnet, dass** der Radträger (2, 32, 52) wenigstens einen Anschlag (12) aufweist, um eine aktive Lenkbewegung um die Aktiv-Lenkachse (3, 33, 53) in wenigstens eine Aktiv-Lenkrichtung (R1, R2) zu begrenzen.

9. Radaufhängung (10, 20, 30, 40, 50) nach Anspruch 1 in Verbindung mit Anspruch 8, **dadurch gekennzeichnet, dass** die Radaufhängung (10, 20, 30, 40, 50) derart ausgebildet ist, dass nach Erreichen des Anschlags (12) der erste Radträger-Teil (2A, 32A, 52A) und der zweite Radträger-Teil (2B, 32B, 52B) bei weiterem Lenken, gemeinsam um eine zweite Lenkachse (4) bewegbar sind, wobei die zweite Lenkachse (4) durch die Geometrie und Elastokinematik der Radaufhängung (10, 20, 30, 40, 50) definiert ist.

10. Radaufhängung (50) nach Anspruch 2, **dadurch gekennzeichnet, dass** die Aktuatoreinrichtung wenigstens zwei Aktuatoren (58A, 58B) aufweist, wobei der erste Radträger-Teil (52A) und der zweite Radträger-Teil (52B) über zwei Aktuatoren (58A, 58B) der Aktuatoreinrichtung miteinander gekoppelt sind.

11. Radaufhängung (50) nach Anspruch 10, **dadurch gekennzeichnet, dass** der erste Radträger-Teil (52A) und der zweite Radträger-Teil (52B) zum aktiven Lenken jeweils gegenläufig in Fahrzeugquerrichtung (y) mittels der beiden Aktuatoren (58A, 58B) bewegbar sind, wobei eine Relativbewegung der beiden Radträger-Teile (52A; 52B) zueinander eine Lenkbewegung des Rades (1) um eine Aktiv-Lenkachse (53) bewirkt, wobei beim aktiven Lenken in eine erste Aktiv-Lenkrichtung (R1) die Aktiv-Lenkachse (53) in Fahrzeuglängsrichtung (x) vor Radmitte (M) liegt und insbesondere beim aktiven Lenken in eine zweite Aktiv-Lenkrichtung (R2) hinter Radmitte (M).

12. Achse für ein zweispuriges Fahrzeug, insbesondere für ein zweispuriges Kraftfahrzeug mit einer linken Radaufhängung (10, 20, 30, 40, 50) und einer rechten Radaufhängung (10, 20, 30, 40, 50), **dadurch gekennzeichnet, dass** wenigstens eine Radaufhängung (10, 20, 30, 40, 50) gemäß einem der Ansprüche 1 bis 11 ausgebildet ist.

13. Achse nach Anspruch 12, **dadurch gekennzeichnet, dass** die Achse eine linke Radaufhängung (10, 20, 30, 40, 50) für ein linkes Rad (1) und eine rechte Radaufhängung (10, 20, 30, 40, 50) für ein rechtes Rad (1) aufweist, wobei die linke Radaufhängung (10, 20, 30, 40, 50) und die rechte Radaufhängung (10, 20, 30, 40, 50) jeweils gemäß Anspruch 1 ausgebildet sind und eine gemeinsame Aktuatoreinrichtung aufweisen, wobei mittels der gemeinsamen Aktuatoreinrichtung der erste Radträger-Teil (2A, 32A, 52A) und der zweite Radträger-Teil (2B, 32B, 52B) der linken Radaufhängung (10, 20, 30, 40, 50) in einem funktionsgemäßen Einbauzustand der Achse in einem Fahrzeug derart relativ zueinander bewegbar sind, dass eine aktive, zumindest geringfügige Lenkbewegung des linken Rades (1) bewirkbar ist, und wobei mittels der gemeinsamen Aktuatoreinrichtung der erste Radträger-Teil (2A, 32A, 52A) und der zweite Radträger-Teil (2B, 32B, 52B) der rechten Radaufhängung (10, 20, 30, 40, 50) in einem funktionsgemäßen Einbauzustand der Achse in einem Fahrzeug derart relativ zueinander bewegbar sind, dass eine aktive, zumindest geringfügige Lenkbewegung des rechten Rades (1) bewirkbar ist.

14. Fahrzeug, insbesondere zweispuriges Kraftfahrzeug, **dadurch gekennzeichnet, dass** das Fahrzeug wenigstens eine Radaufhängung (10, 20, 30, 40, 50) aufweist, die gemäß einem der Ansprüche 1 bis 11 ausgebildet ist und/oder wenigstens eine Achse, die gemäß Anspruch 12 oder 13 ausgebildet ist.

## Claims

1. Wheel suspension system (10, 20, 30) for an at least slightly actively steerable rear wheel (1) of a double-track vehicle,
- the wheel suspension system (10, 20, 30) having a wheel support (2, 32) for receiving the wheel (1), a toe link (7) and at least one further link (5, 6) for attaching the wheel support (2, 32) to the vehicle body, and an actuator device with at least one actuator (8) for active steering of the wheel (1) in a first active steering direction (R1) and in a second active steering direction (R2),
- the wheel support (2, 32) being configured in at least two pieces and having a first wheel support part (2A, 32A) and a second wheel support part (2B, 32B),
- the first wheel support part (2A, 32A) being configured to receive the wheel (1), and it being possible for the second wheel support part (2B, 32B) to be connected to the vehicle body and to be steered in a non-active manner via at least one of the further links (5, 6),
- it being possible, in a functional use state of the wheel suspension system (10, 20, 30) in a vehicle, for the first wheel support part (2A, 32A) and the second wheel support part (2B, 32B) to be moved relative to one another by means of the actuator device in such a way that an active, at least slight steering movement of the wheel (1) can be brought about, and
- the toe link (7) being articulated on the wheel support side on the first wheel support part (2A, 32A), and at least one actuator (8) of the actuator device being coupled to the first wheel support part (2A, 32A) via the toe link (7), at least one actuator (8) of the actuator device being attached via the toe link (7) to the first wheel support part (2A, 32A),
- the first wheel support part (32A) and the second wheel support part (32B) being coupled mechanically to one another by means of two coupling devices (34, 37; 35, 36) which are set up to guide the first wheel support part (32A) and the second wheel support part (32B) in the vehicle transverse direction (y) in each case in opposite directions during active steering, a relative movement of the two wheel support parts (32A, 32B) with respect to one another bringing about a steering movement of the wheel (1) about an active steering axis (33), the active steering axis (33) lying in the vehicle longitudinal direction (x) between the two coupling devices (34, 37; 35, 36),
- the two coupling devices (34, 37; 35, 36) having a slotted guide (34, 37; 35, 36) or being formed by way of a slotted guide (34, 37; 35, 36), which slotted guides (34, 37, 35, 36) are formed in each case by way of a slot guide pin (34, 35) and by way of slotted guide grooves (36, 37) of accordingly corresponding configuration, and the slotted guide grooves (36, 37) having a curved profile here, a curvature centre point lying in the vehicle longitudinal direction (x) in each case between the two slot guide pins (37, 36).

2. Wheel suspension system (40, 50) for an at least slightly actively steerable rear wheel (1) of a double-track vehicle,
- the wheel suspension system (40, 50) having a wheel support (2, 52) for receiving the wheel (1), a toe link (7) and at least one further link for attaching the wheel support (2, 52) to the vehicle body, and an actuator device with at least one actuator (48, 58A, 58B) for active steering of the wheel (1) in a first active steering direction (R1) and in a second active steering direction (R2),
- the wheel support (2, 52) being configured in at least two pieces and having a first wheel support part (2A, 52A) and a second wheel support part (2B, 52B),
- the first wheel support part (2A, 52A) being configured to receive the wheel (1), and it being possible for the second wheel support part (2B, 52B) to be connected to the vehicle body via at least one of link (5, 6, 7),
- it being possible, in a functional use state of the wheel suspension system (40, 50) in a vehicle, for the first wheel support part (2A, 52A) and the second wheel support part (2B, 52B) to be moved relative to one another by means of the actuator device in such a way that an active, at least slight steering movement of the wheel (1) can be brought about, and
- the toe link (7) being articulated on the wheel support side on the second wheel support part (2B, 52B), and at least one actuator (48, 58A, 58B) of the actuator device coupling the first wheel support part (2A, 52A) to the second wheel support part (2B, 52B),
- the first wheel support part (32A) and the second wheel support part (32B) being coupled mechanically to one another by means of two coupling devices (34, 37; 35, 36) which are set up to guide the first wheel support part (32A) and the second wheel support part (32B) in the vehicle transverse direction (y) in each case in opposite directions during active steering, a relative movement of the two wheel support parts (32A, 32B) with respect to one another bringing about a steering movement of the wheel (1) about an active steering axis (33), the active steering axis (33) lying in the vehicle longitudinal direction (x) between the two coupling devices (34, 37; 35, 36),
- the two coupling devices (34, 37; 35, 36) having a slotted guide (34, 37; 35, 36) or being formed by way of a slotted guide (34, 37; 35, 36), which slotted guides (34, 37, 35, 36) are formed in each case by way of a slot guide pin 34 and 35 and by way of slotted guide grooves 36 and 37 of accordingly corresponding configuration, and the slotted guide grooves 36 and 37 having a curved profile here, a curvature centre point lying in the vehicle longitudinal direction (x) in each case between the two slot guide pins 37 and 36.

3. Wheel suspension system (10, 20, 30, 40, 50) according to Claim 2, **characterized in that** at least one actuator (48, 58A, 58B) of the actuator device is attached to the first wheel support part (2A, 52A) and to the second wheel support part (2B, 52B), and is arranged at least partially in the vehicle transverse direction (y) between the first wheel support part (2A, 52A) and the second wheel support part (2B, 52B).

4. Wheel suspension system (10, 20, 30, 40, 50) according to one of the preceding claims, **characterized in that** the first wheel support part (2A, 32A, 52A) and the second wheel support part (2B, 32B, 52B) are connected to one another such that they can be moved pivotably about a pivot axis (3, 33, 53) which runs substantially in the vehicle vertical direction (z) and defines an active steering axis (3, 33, 53) at least in a first defined active steering angle range and/or for the first active steering direction (R1).

5. Wheel suspension system (10, 30, 50) according to Claim 4, **characterized in that** the pivot axis (3, 33, 53) lies in front of the wheel centre (M) in the vehicle longitudinal direction (x).

6. Wheel suspension system (10, 30, 40, 50) according to one of the preceding claims, **characterized in that** the toe link (7) is articulated on the wheel support (2, 32, 52) behind the wheel centre (M) in the vehicle longitudinal direction (x).

7. Wheel suspension system (10, 20, 30, 40, 50) according to one of the preceding claims, in particular according to Claim 1, **characterized in that** at least one wheel support part (2B, 32B, 52B) has a guide device (11, 48, 58A, 58B) for at least partial guidance of the other wheel support part (2A, 32A, 52A), for the guidance of that free end (9) of the other wheel support part (2A, 32A, 52A) which faces away from the pivot axis (3, 33, 53) .

8. Wheel suspension system (10, 20, 30, 40, 50) according to one of the preceding claims, **characterized in that** the wheel support (2, 32, 52) has at least one stop (12), in order to limit an active steering movement about the active steering axis (3, 33, 53) in at least one active steering direction (R1, R2).

9. Wheel suspension system (10, 20, 30, 40, 50) according to Claim 1 in conjunction with Claim 8, **characterized in that** the wheel suspension system (10, 20, 30, 40, 50) is configured in such a way that, after the stop (12) is reached, the first wheel support part (2A, 32A, 52A) and the second wheel support part (2B, 32B, 52B) can be moved together about a second steering axis (4) during further steering, the second steering axis (4) being defined by way of the geometry and elastokinematics of the wheel suspension system (10, 20, 30, 40, 50).

10. Wheel suspension system (50) according to Claim 2, **characterized in that** the actuator device has at least two actuators (58A, 58B), the first wheel support part (52A) and the second wheel support part (52B) being coupled to one another via two actuators (58A, 58B) of the actuator device.

11. Wheel suspension system (50) according to Claim 10, **characterized in that**, for active steering, the first wheel support part (52A) and the second wheel support part (52B) can be moved in each case in opposite directions in the vehicle transverse direction (y) by means of the two actuators (56A, 56B), a relative movement of the two wheel support parts (52A; 52B) with respect to one another bringing about a steering movement of the wheel (1) about an active steering axis (53), the active steering axis (53) lying in front of the wheel centre (M) in the vehicle longitudinal direction (x) during active steering in a first active steering direction (R1), and lying behind the wheel centre (M), in particular, during active steering in a second active steering direction (R2).

12. Axle for a double-track vehicle, in particular for a double-track motor vehicle with a left-hand wheel suspension system (10, 20, 30, 40, 50) and a right-hand wheel suspension system (10, 20, 30, 40, 50), **characterized in that** at least one wheel suspension system (10, 20, 30, 40, 50) is configured according to one of Claims 1 to 11.

13. Axle according to Claim 12, **characterized in that** the axle has a left-hand wheel suspension system (10, 20, 30, 40, 50) for a left-hand wheel (1) and a right-hand wheel suspension system (10, 20, 30, 40, 50) for a right-hand wheel (1), the left-hand wheel suspension system (10, 20, 30, 40, 50) and the right-hand wheel suspension system (10, 20, 30, 40, 50) being configured in each case according to Claim 1 and having a common actuator device, it being possible, in a functional installed state of the axle in a vehicle, for the first wheel support part (2A, 32A, 52A) and the second wheel support part (2B, 32B, 52B) of the left-hand wheel suspension system (10, 20, 30, 40, 50) to be moved by means of the common actuator device relative to one another in such a way that an active, at least slight steering movement of the left-hand wheel (1) can be brought about, and it being possible, in a functional installed state of the axle in a vehicle, for the first wheel support part (2A, 32A, 52A) and the second wheel support part (2B, 32B, 52B) of the right-hand wheel suspension system (10, 20, 30, 40, 50) to be moved by means of the common actuator device relative to one another in such a way that an active, at least slight steering movement of the right-hand wheel (1) can be brought about.

14. Vehicle, in particular double-track motor vehicle, **characterized in that** the vehicle has at least one wheel suspension system (10, 20, 30, 40, 50) which is configured according to one of Claims 1 to 11 and/or at least one axle which is configured according to Claim 12 or 13.

## Revendications

1. Suspension de roue (10, 20, 30) pour une roue arrière (1) d'un véhicule à deux voies, au moins légèrement orientable activement,
- la suspension de roue (10, 20, 30) comprenant un support de roue (2, 32) servant à la réception de la roue (1), un bras de réglage d'alignement des roues (7) et au moins un autre bras (5, 6) servant à la liaison du support de roue (2, 32) à la carrosserie de véhicule et un dispositif actionneur comportant au moins un actionneur (8) servant à orienter activement la roue (1) dans une première direction d'orientation active (R1) et dans une deuxième direction d'orientation active (R2),
- le support de roue (2, 32) étant réalisé au moins en deux parties et comprenant une première partie de support de roue (2A, 32A) et une deuxième partie de support de roue (2B, 32B),
- la première partie de support de roue (2A, 32A) étant réalisée pour la réception de la roue (1) et la deuxième partie de support de roue (2B, 32B) pouvant être reliée à la carrosserie de véhicule par le biais d'au moins l'un des autres bras (5, 6) et n'étant pas orientable activement,
- la première partie de support de roue (2A, 32A) et la deuxième partie de support de roue (2B, 32B), dans un état d'utilisation fonctionnel de la suspension de roue (10, 20, 30) dans un véhicule, pouvant être déplacées l'une par rapport à l'autre au moyen du dispositif actionneur de telle sorte qu'un mouvement d'orientation actif, au moins léger, de la roue (1) puisse être provoqué, et
- le bras de réglage d'alignement des roues (7) étant articulé sur la première partie de support de roue (2A, 32A) du côté du support de roue et au moins un actionneur (8) du dispositif actionneur étant accouplé à la première partie de support de roue (2A, 32A) par le biais du bras de réglage d'alignement des roues (7), au moins un actionneur (8) du dispositif actionneur étant relié à la première partie de support de roue (2A, 32A) par le biais du bras de réglage d'alignement des roues (7),
- la première partie de support de roue (32A) et la deuxième partie de support de roue (32B) étant reliées mécaniquement l'une à l'autre au moyen de deux dispositifs d'accouplement (34, 37 ; 35, 36), lesquels sont conçus pour guider la première partie de support de roue (32A) et la deuxième partie de support de roue (32B) en cas d'orientation active respectivement de manière opposée dans la direction transversale du véhicule (y), un mouvement relatif des deux parties de support de roue (32A, 32B) l'une par rapport à l'autre provoquant un mouvement d'orientation de la roue (1) autour d'un axe d'orientation actif (33), l'axe d'orientation actif (33) se situant entre les deux dispositifs d'accouplement (34, 37 ; 35, 36) dans la direction longitudinale du véhicule (x),
- les deux dispositifs d'accouplement (34, 37 ; 35, 36) comprenant un guide à coulisse (34, 37 ; 35, 36) ou étant formés par un guide à coulisse (34, 37 ; 35, 36), lequel guide à coulisse (34, 37, 35, 36) est formé respectivement par un boulon de guidage de coulisse (34, 35) ainsi que par des rainures de guidage de coulisse (36, 37) réalisées de manière correspondante et appropriée et les rainures de guidage de coulisse (36, 37) présentant à cet effet une allure incurvée, un centre de courbure étant situé respectivement entre les deux rainures de guidage de coulisse (37, 36) dans la direction longitudinale du véhicule (x).

2. Suspension de roue (40, 50) pour une roue arrière (1) d'un véhicule à deux voies, au moins légèrement orientable activement,
- la suspension de roue (40, 50) comprenant un support de roue (2, 52) servant à la réception de la roue (1), un bras de réglage d'alignement des roues (7) et au moins un autre bras servant à la liaison du support de roue (2, 52) à la carrosserie de véhicule et un dispositif actionneur comportant au moins un actionneur (48, 58A, 58B) servant à orienter activement la roue (1) dans une première direction d'orientation active (R1) et dans une deuxième direction d'orientation active (R2),
- le support de roue (2, 52) étant réalisé au moins en deux parties et comprenant une première partie de support de roue (2A, 52A) et une deuxième partie de support de roue (2B, 52B),
- la première partie de support de roue (2A, 52A) étant réalisée pour la réception de la roue (1) et la deuxième partie de support de roue (2B, 52B) pouvant être reliée à la carrosserie de véhicule par le biais d'au moins un bras (5, 6, 7),
- la première partie de support de roue (2A, 52A) et la deuxième partie de support de roue (2B, 52B), dans un état d'utilisation fonctionnel de la suspension de roue (40, 50) dans un véhicule, pouvant être déplacées l'une par rapport à l'autre au moyen du dispositif actionneur de telle sorte qu'un mouvement d'orientation actif, au moins léger, de la roue (1) puisse être provoqué, et
- le bras de réglage d'alignement des roues (7) étant articulé sur la deuxième partie de support de roue (2B, 52B) du côté du support de roue et au moins un actionneur (48, 58A, 58B) du dispositif actionneur accouplant la première partie de support de roue (2A, 52A) à la deuxième partie de support de roue (2B, 52B),
- la première partie de support de roue (32A) et la deuxième partie de support de roue (32B) étant reliées mécaniquement l'une à l'autre au moyen de deux dispositifs d'accouplement (34, 37 ; 35, 36), lesquels sont conçus pour guider la première partie de support de roue (32A) et la deuxième partie de support de roue (32B) en cas d'orientation active respectivement de manière opposée dans la direction transversale du véhicule (y), un mouvement relatif des deux parties de support de roue (32A, 32B) l'une par rapport à l'autre provoquant un mouvement d'orientation de la roue (1) autour d'un axe d'orientation actif (33), l'axe d'orientation actif (33) se situant entre les deux dispositifs d'accouplement (34, 37 ; 35, 36) dans la direction longitudinale du véhicule (x),
- les deux dispositifs d'accouplement (34, 37 ; 35, 36) comprenant un guide à coulisse (34, 37 ; 35, 36) ou étant formés par un guide à coulisse (34, 37 ; 35, 36), lequel guide à coulisse (34, 37, 35, 36) est formé respectivement par un boulon de guidage de coulisse 34 ou 35 ainsi que par des rainures de guidage de coulisse 36 ou 37 réalisées de manière correspondante et appropriée et les rainures de guidage de coulisse 36 et 37 présentant à cet effet une allure incurvée, un centre de courbure étant situé respectivement entre les deux rainures de guidage de coulisse 37 et 36 dans la direction longitudinale du véhicule (x).

3. Suspension de roue (10, 20, 30, 40, 50) selon la revendication 2, **caractérisée en ce qu'**au moins un actionneur (48, 58A, 58B) du dispositif actionneur est relié à la première partie de support de roue (2A, 52A) et à la deuxième partie de support de roue (2B, 52B) et est disposé au moins partiellement dans la direction transversale du véhicule (y) entre la première partie de support de roue (2A, 52A) et la deuxième partie de support de roue (2B, 52B).

4. Suspension de roue (10, 20, 30, 40, 50) selon l'une des revendications précédentes, **caractérisée en ce que** la première partie de support de roue (2A, 32A, 52A) et la deuxième partie de support de roue (2B, 32B, 52B) sont reliées l'une à l'autre de manière mobile en pivotement autour d'un axe de pivotement (3, 33, 53) s'étendant sensiblement dans la direction verticale du véhicule (z), lequel axe définit un axe d'orientation actif (3, 33, 53) au moins dans une première plage d'angles d'orientation active définie et/ou pour la première direction d'orientation active (R1).

5. Suspension de roue (10, 30, 50) selon la revendication 4, **caractérisée en ce que** l'axe de pivotement (3, 33, 53) est situé devant le centre de roue (M) dans la direction longitudinale du véhicule (x).

6. Suspension de roue (10, 30, 40, 50) selon l'une des revendications précédentes, **caractérisée en ce que** le bras de réglage d'alignement des roues (7) est articulé derrière le centre de roue (M) sur le support de roue (2, 32, 52) dans la direction longitudinale du véhicule (x).

7. Suspension de roue (10, 30, 40, 50) selon l'une des revendications précédentes, en particulier selon la revendication 1, **caractérisée en ce qu'**au moins une partie de support de roue (2B, 32B, 52B) comprend un dispositif de guidage (11, 48, 58A, 58B) servant au guidage au moins partiel de l'autre partie de support de (2A, 32A, 52A), pour le guidage de l'extrémité libre (9), opposée à l'axe de pivotement (3, 33, 53), de l'autre partie de support de roue (2A, 32A, 52A).

8. Suspension de roue (10, 20, 30, 40, 50) selon l'une des revendications précédentes, **caractérisée en ce que** le support de roue (2, 32, 52) comprend au moins une butée (12), afin de limiter un mouvement d'orientation actif autour de l'axe d'orientation actif (3, 33, 53) dans au moins une direction d'orientation active (R1, R2).

9. Suspension de roue (10, 20, 30, 40, 50) selon la revendication 1 en association avec la revendication 8, **caractérisée en ce que** la suspension de roue (10, 20, 30, 40, 50) est réalisée de telle sorte qu'une fois que la butée (12) a été atteinte, la première partie de support de roue (2A, 32A, 52A) et la deuxième partie de support de roue (2B, 32B, 52B) sont mobiles conjointement autour d'un deuxième axe d'orientation (4) en cas d'orientation supplémentaire, le deuxième axe d'orientation (4) étant défini par la géométrie et l'élastocinématique de la suspension de roue (10, 20, 30, 40, 50).

10. Suspension de roue (50) selon la revendication 2, **caractérisée en ce que** le dispositif actionneur comprend au moins deux actionneurs (58A, 58B), la première partie de support de roue (52A) et la deuxième partie de support de (52B) étant accouplées l'une à l'autre par le biais de deux actionneurs (58A, 58B) du dispositif actionneur.

11. Suspension de roue (50) selon la revendication 10, **caractérisée en ce que** la première partie de support de roue (52A) et la deuxième partie de support de roue (52B) sont déplaçables respectivement de manière opposée dans la direction transversale du véhicule (y) au moyen des deux actionneurs (58A, 58B) pour l'orientation active, un mouvement relatif des deux parties de support de roue (52A ; 52B) l'une par rapport à l'autre provoquant un mouvement d'orientation de la roue (1) autour d'un axe d'orientation actif (53), l'axe d'orientation actif (53) étant situé devant le centre de roue (M) dans la direction longitudinale du véhicule (x) en cas d'orientation active dans une première direction d'orientation active (R1) et en particulier derrière le centre de roue (M) dans une deuxième direction d'orientation active (R2) en cas d'orientation active.

12. Essieu pour un véhicule à deux voies, en particulier pour un véhicule automobile à deux voies comportant une suspension de roue gauche (10, 20, 30, 40, 50) et une suspension de roue droite (10, 20, 30, 40, 50), **caractérisé en ce qu'**au moins une suspension de roue (10, 20, 30, 40, 50) est réalisée selon l'une des revendications 1 à 11.

13. Essieu selon la revendication 12, **caractérisé en ce que** l'essieu comprend une suspension de roue gauche (10, 20, 30, 40, 50) pour une roue gauche (1) et une suspension de roue droite (10, 20, 30, 40, 50) pour une roue droite (1), la suspension de roue gauche (10, 20, 30, 40, 50) et la suspension de roue droite (10, 20, 30, 40, 50) étant réalisées respectivement selon la revendication 1 et comprenant un dispositif actionneur commun, et, au moyen du dispositif actionneur commun, la première partie de support de roue (2A, 32A, 52A) et la deuxième partie de support de roue (2B, 32B, 52B) de la suspension de roue gauche (10, 20, 30, 40, 50) étant, dans un état d'installation fonctionnel de l'essieu dans un véhicule, mobiles l'une par rapport à l'autre de telle sorte qu'un mouvement d'orientation actif, au moins léger, de la roue gauche (1) puisse être provoqué, et, au moyen du dispositif actionneur commun, la première partie de support de roue (2A, 32A, 52A) et la deuxième partie de support de roue (2B, 32B, 52B) de la suspension de roue droite (10, 20, 30, 40, 50) étant, dans un état d'installation fonctionnel de l'essieu dans un véhicule, mobiles l'une par rapport à l'autre de telle sorte qu'un mouvement d'orientation actif, au moins léger, de la roue droite (1) puisse être provoqué.

14. Véhicule, en particulier véhicule automobile à deux voies, **caractérisé en ce que** le véhicule comprend au moins une suspension de roue (10, 20, 30, 40, 50) qui est réalisée selon l'une des revendications 1 à 11 et/ou au moins un essieu qui est réalisé selon la revendication 12 ou 13.
